(19) Europäisches Patentamt
European Patent Office
Office européen des brevets

(11) EP 2 725 528 A1

(12) **EUROPEAN PATENT APPLICATION**
published in accordance with Art. 153(4) EPC

(43) Date of publication:
**30.04.2014 Bulletin 2014/18**

(21) Application number: **12801832.2**

(22) Date of filing: **27.03.2012**

(51) Int Cl.:
***G06Q 10/04*** *(2012.01)* ***G06F 17/30*** *(2006.01)*
***G06Q 50/04*** *(2012.01)*

(86) International application number:
**PCT/JP2012/057839**

(87) International publication number:
**WO 2012/176519 (27.12.2012 Gazette 2012/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2011 JP 2011137743**

(71) Applicant: **Yanmar Co., Ltd.**
**Osaka-shi, Osaka 530-8311 (JP)**

(72) Inventor: **NAGAKURA, Katsuhiko**
**Osaka-shi**
**Osaka 530-8311 (JP)**

(74) Representative: **Tischner, Oliver**
**Lavoix Munich**
**Bayerstrasse 83**
**80335 München (DE)**

# (54) PREDICTION DEVICE, PREDICTION METHOD AND PREDICTION PROGRAM

(57) Provided are a prediction device, a prediction method, and a prediction program having a high prediction accuracy in prediction of a prediction object varying time-dependently.

In the prediction of the prediction object, a change of the prediction object is predicted on the basis of data concerning a plurality of items related to the prediction object. That is, for each item, a factorial effect value is derived that represents the SN ratio of the prediction object to each data including the data of the item relative to the SN ratio of the prediction object to each data excluding the data of the item. Then, the strength of the SN ratio of the comprehensive estimated value to the data of a plurality of items selected in descending order of the derived factorial effect value is calculated for each value of the number of items. Then, on the basis of the SN ratio of the comprehensive estimated value calculated for each value of the number of items, the number of items is determined. Then, in descending order of the derived factorial effect value, items in the determined number of items are selected. Then, on the basis of the data of the selected items, a change of the prediction object is predicted by using a method such as a T-method.

FIG. 11

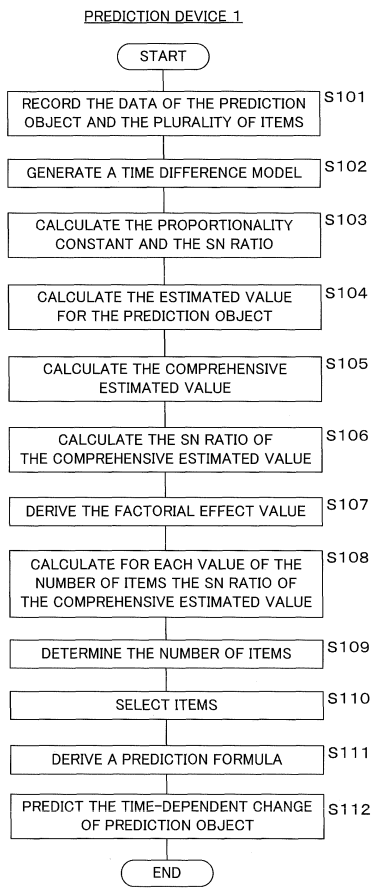


EP 2 725 528 A1

## Description

### Field of the Invention

The present application relates to a prediction device, a prediction method, and a prediction program predicting a change of a prediction object on the basis of the data concerning the prediction object varying time-dependently and a plurality of items related to the prediction object.

### Background of the Invention

In corporate management, demand prediction for products is remarkably important for the purpose of testing the direction and the strategy of a company. Then, an issue of management is how to connect the predicted demand to the plan of fields such as sale, stock, production, physical distribution, and development. Further, in addition to such prediction concerning the corporate management like demand prediction and sales prediction, prediction of a prediction object that varies time-dependently is an important issue in various fields.
As a method for predicting a time-dependent change of a prediction object such as a demand prediction for a product, various methods of time series analysis have been proposed. An example of such an analysis method is a multivariate analysis such as a multiple regression analysis and a T-method (for example, see Patent Document 1 and Nonpatent Document 1).

### Prior Art References

### Patent Document

Patent Document 1 : Japanese Patent Publication No. 3141164

### Nonpatent Document

Nonpatent Document 1 :

Kazuo Tatebayashi (Editor and Author), Shoichi Tejima, and Yoshiko Hasegawa, "Introduction to MT system", Nikkagiren Shuppan-Sha (JUSE Press, Ltd.), December, 2008.

### Summary of the Invention

### Problems to be Solved by the Invention

Nevertheless, for example, in analysis using the multiple regression analysis, a problem arises that when the number of items is greater than the number of data pieces, analysis itself is not achievable. In the T-method, this problem is resolved, nevertheless, a problem remains concerning how to select items to be used in the analysis. In the selection of items, for example, a technique of two-sided T-method has been proposed as described in Nonpatent Document 1.
The inventor of the present application has found a problem of further improving a prediction accuracy on condition that a prediction method using the T-method is employed as a basis. Then, in order to resolve the problem, the present invention is to provide a prediction device, a prediction method, and a prediction program realizing improvement in the prediction accuracy.

### Means for Solving the Problem

The prediction device according to the present invention is characterized by a prediction device that is provided with recording means time-dependently recording data concerning a prediction object varying time-dependently and a plurality of items related to the prediction object and that predicts a change of the prediction object on the basis of the data recorded in the recording means, the prediction device comprising: derivation means deriving for each item a factorial effect value representing a strength of correlation of the prediction object to each data including the data of the item relative to a strength of correlation of the prediction object to each data excluding the data of the item; calculation means calculating for each value of the number of items a strength of correlation of the prediction object to the data of a plurality of items selected in descending order of the factorial effect value derived by the derivation means; determination means determining the number of items on the basis of the strength of correlation for each value of the number of items calculated by the calculation means; selection means selecting items in the number of items determined by the determination means, in descending order of the factorial effect value derived by the derivation means; and prediction means predicting a change of the prediction object on the basis of the data of the items selected by the selection means.

The prediction device according to the present invention is characterized in that the derivation means is constructed such as to derive the factorial effect value on the basis of the data of the item and the data of the prediction object after a given period of the data of the item, and in that the prediction means is constructed such as to predict a change of the prediction object after elapse of a given period to the data of the item.

The prediction device according to the present invention is characterized in that the calculation means includes: means setting up as an initial value of the threshold a value smaller than or equal to the minimum (or greater than or equal to the maximum) of the factorial effect values derived by the derivation means; first means selecting an item whose calculated factorial effect value is greater than or equal to the set-up threshold; second means calculating a strength of correlation of the prediction object to the data of the selected item; and third means resetting the threshold to be a value increased (or a value reduced) by a given value, and in that the first means, the second means, and the third means calculate for each value of the number of items the strength of correlation of the prediction object to the data of a plurality of selected items.

The prediction device according to the present invention is characterized in that the prediction means includes means deriving a prediction formula based on a weight for each item based on the strength of correlation of the prediction object to the data of each selected item and a proportionality constant for each item representing a linear relation between the data of each selected item and the prediction object or a nonlinear relation alternative to the linear relation and is constructed such as to derive a change of the prediction object on the basis of the derived prediction formula.

The prediction method according to the present invention is characterized by a prediction method that a prediction device capable of accessing recording means time-dependently recording data concerning a prediction object varying time-dependently and a plurality of items related to the prediction object executes processing of predicting a change of the prediction object on the basis of the data recorded in the recording means, wherein the prediction device performs: a step of deriving for each item a factorial effect value representing a strength of correlation of the prediction object to each data including the data of the item relative to a strength of correlation of the prediction object to each data excluding the data of the item; a step of calculating for each value of the number of items a strength of correlation of the prediction object to the data of a plurality of items selected in descending order of the derived factorial effect value; a step of determining the number of items on the basis of the strength of correlation calculated for each value of the number of items; a step of selecting items in the determined number of items in descending order of the derived factorial effect value; and a step of predicting a change of the prediction object on the basis of the data of the selected items.

The prediction program according to the present invention is characterized by a prediction program causing a computer capable of accessing recording means time-dependently recording data concerning a prediction object varying time-dependently and a plurality of items related to the prediction object to execute processing of predicting a change of the prediction object on the basis of the data recorded in the recording means, the prediction program causing the computer to execute: a procedure of deriving for each item a factorial effect value representing a strength of correlation of the prediction object to each data including the data of the item relative to a strength of correlation of the prediction object to each data excluding the data of the item; a procedure of calculating for each value of the number of items a strength of correlation of the prediction object to the data of a plurality of items selected in descending order of the derived factorial effect value; a procedure of determining the number of items on the basis of the strength of correlation calculated for each value of the number of items; a procedure of selecting items in the determined number of items in descending order of the derived factorial effect value; and a procedure of predicting a change of the prediction object on the basis of the data of the selected items.

In the present invention, the number of items is determined on the basis of the strength of correlation for each value of the number of items. Then, on the basis of the determined number of items, items to be used in the analysis are selected so that optimal item selection is realized.

In the present invention, in derivation of the prediction formula, a nonlinear component is suitably taken into consideration so that the prior-art method is allowed to be expanded to a prediction method using various items.

In the present invention, analysis of the prediction object after elapse of a given period of time. This avoids the necessity of estimation of the data of each item at the target time of prediction.

## Effect of the Invention

In the present invention, in selection of items to be used in analysis, the number of items is determined on the basis of the correlation for each value of the number of items and then optimal item selection is achieved on the basis of the number of items and the factorial effect value having been determined. This provides an excellent effect like improvement in the prediction accuracy and the like.

In the present invention, in derivation of the prediction formula, a nonlinear component is allowed to be suitably taken into consideration. Thus, prediction is allowed to be applied even for a data change of an item not having linearity.

This provides an excellent effect like improvement in the prediction accuracy and the like.

In the present invention, a time difference model is proposed that analysis is performed on the prediction object after a given period. Thus, on the basis of the time difference model, a future change of the prediction object is allowed to be predicted from the past items. This avoids the necessity of estimation of the data of each item at the target time of prediction and hence avoids an estimation error resulting from this. This provides an excellent effect like improvement in the prediction accuracy and the like.

**Brief Description of the Drawings**

[FIG. 1] FIG. 1 is an explanation diagram conceptually illustrating a time difference model to be treated by a prediction method of the present invention.

[FIG. 2] FIG. 2 is a table illustrating an example of data of each item and a prediction object used in a prediction method according to the present invention.

[FIG. 3] FIG. 3 is a table illustrating an example of a proportionality constant 6 and an SN ratio η of each item used in a prediction method according to the present invention.

[FIG. 4] FIG. 4 is a table illustrating an example of an actual value and a comprehensive estimated value of a prediction object used in a prediction method according to the present invention.

[FIG. 5] FIG. 5 is an example of a factor effect diagram used in a prediction method according to the present invention.

[FIG. 6] FIG. 6 is a graph illustrating an example of influence on a factorial effect of each item used in a prediction method according to the present invention.

[FIG. 7] FIG. 7 is a graph illustrating an example of a relation between the number of selected items and the SN ratio of a comprehensive estimated value in a prediction method according to the present invention.

[FIG. 8A] FIG. 8A is a graph illustrating an example of the SN ratio of a comprehensive estimated value to selected items in a prediction method according to the present invention.

[FIG. 8B] FIG. 8B is a graph illustrating an example of a percent contribution to selected items in a prediction method according to the present invention.

[FIG. 9] FIG. 9 is a graph conceptually illustrating an example of processing of determining an optimal value for the number of selected items in a prediction method according to the present invention.

[FIG. 10] FIG. 10 is a block diagram illustrating an exemplary configuration of a prediction device of the present invention.

[FIG. 11] FIG. 11 is a flow chart illustrating an example of prediction processing performed by a prediction device of the present invention.

[FIG. 12] FIG. 12 is a flow chart illustrating an example of prediction processing performed by a prediction device of the present invention.

[FIG. 13] FIG. 13 is a table illustrating contents of items according to Implementation Example 1 in which a prediction method of the present invention is applied.

[FIG. 14] FIG. 14 is an explanation diagram schematically illustrating a time difference model of Implementation Example 1 in which a prediction method of the present invention is applied.

[FIG. 15] FIG. 15 is a graph illustrating a relation between the number of selected items and the SN ratio of the comprehensive estimated value in Implementation Example 1 in which a prediction method of the present invention is applied.

[FIG. 16] FIG. 16 is a graph illustrating a time-dependent change of an actual value and a predicted value in Implementation Example 1 in which a prediction method of the present invention is applied.

[FIG. 17] FIG. 17 is a distribution diagram illustrating a relation between an actual value and a predicted value in Implementation Example 1 in which a prediction method of the present invention is applied.

[FIG. 18] FIG. 18 is a graph summarizing results of prediction accuracies of Implementation Example 1 in which a prediction method of the present invention is applied.

[FIG. 19] FIG. 19 is a table illustrating contents of items according to Implementation Example 2 in which a prediction method of the present invention is applied.

[FIG. 20] FIG. 20 is a graph illustrating an example of influence on a factorial effect of each item according to Implementation Example 2 in which a prediction method of the present invention is applied.

[FIG. 21] FIG. 21 is a graph illustrating a relation between the number of selected items and the SN ratio of the comprehensive estimated value in Implementation Example 2 in which a prediction method of the present invention is applied.

[FIG. 22A] FIG. 22A is a graph illustrating prediction accuracies of Implementation Example 2 in which a prediction method of the present invention is applied.

[FIG. 22B] FIG. 22B is a graph illustrating prediction accuracies of Implementation Example 2 in which a prediction method of the present invention is applied.

**Mode of Implementing the Invention**

The present invention is described below in detail with reference to the drawings illustrating an embodiment thereof.

First, a theory providing a basis for a prediction method according to the present invention is described below. The prediction method according to the present invention has been obtained by performing various technical improvements on a prediction method employing an MT system, specifically, a T-method, for the purpose of achieving industrial feasibility. That is, an object is to, with regarding a prediction object varying time-dependently as an objective characteristic, predict a change of the prediction object by using data concerning a plurality of items related to the prediction object.

FIG. 1 is an explanation diagram conceptually illustrating a time difference model to be treated by a prediction method of the present invention. In the prediction method of the present invention, a time difference model is proposed that, for example, when a prediction object after twelve months adopted as a given period is to be predicted on the basis of data of each month adopted as a unit period, for the data of each item, the data of the prediction object after twelve months is adopted as the objective characteristic data. FIG. 1 conceptually illustrates the time difference model and illustrates the relation between the data of a plurality of items illustrated in an upper part and the data of the prediction object illustrated in a lower part. In the data of the item and the data of the prediction object, one cell represents data in a unit period. Then, data is aligned time-dependently from right to left. In FIG. 1, four cells correspond to a given period for prediction. Then, as indicated by (1), correspondence is assigned between the data of a period of eight cells of each item and the data of a period of eight cells after four cells of the prediction object. Then, as indicated by (2), after elapse of time of four cells, by using the data of the item for the period, the data of the prediction object of a period advancing by four cells is predicted.

As illustrated in FIG. 1, in the time difference model, the relation is acquired between the data of a plurality of items and the data of the prediction object advancing by four cells corresponding to a given period. By virtue of this, the data of the prediction object of the future is allowed to be predicted from the data of the items of the past or the present.

In the prediction method of the conventional art, for example, in the case of multiple regression analysis, the data of items and the data of a prediction object at the same time are adopted as explanatory variables and an objective variable, respectively. Then, an optimal approximation model is acquired from the past data and then prediction is performed by extrapolating this. This means that the data of the future of each item is estimated and then prediction is performed on the basis of the estimated values. Thus, estimation errors or the like at that time could serve as a factor degrading the prediction accuracy. In the time difference model it is not performed that the data of the future of each item is estimated. The time difference model is on the basis of a premise that an event occurring in the future has a sign in the past. In the time difference model, the data of the future of the prediction object is predicted with accuracy from the data of the past or the present of each item. Here, when correspondence is to be assigned between the data of the items and the data of the prediction object in a fixed period, correspondence is assigned between the data of the items in an arbitrary period and the data of the prediction object in a period after elapse of a given period.

Next, outlines of a T-method applied to the prediction method according to the present invention are described below. FIG. 2 is a table illustrating an example of the data of each item and the prediction object used in the prediction method according to the present invention. In FIG. 2, the member indicates an index indicating data of each unit period and expressed by 1, 2, ..., 1. An item 1, an item 2, ..., an item k indicate a plurality of items related to a prediction object. X11, X12, ... indicate the data of each item. The prediction object is an item indicates a prediction object. M1, M2, ... indicate the data of the prediction object. Here, as described above, in the prediction method of the present invention, since the time difference model is adopted, a time difference is present between the data of the plurality of items and the data of the prediction object to which correspondence as the same member has been assigned. Here, actual data may be employed as data to be used for prediction. However, it is preferable that arithmetic operation of subtracting from the data of each item the average of the data of the item is performed so that the data is normalized and then the obtained data is used. This normalization allows a later-described prediction formula to be expressed as a straight line passing through the origin in the unit space for each item.

Then, a proportionality constant 6 and an SN ratio $\eta$ (a square ratio) are calculated for each item according to the following Formula 1 and Formula 2. The SN ratio is a value indicated by using the inverse of the variance as indicated in the following Formula 2. Then, the SN ratio is the sensitivity of the prediction object to each item and indicates the strength of correlation between each item and the prediction object.

[Mathematical Expression 1]
a proportionality constant

$$\beta_1 = \frac{M_1 X_{11} + M_2 X_{21} + \cdots + M_l X_{l1}}{r} \quad \cdots \text{ Formula 1}$$

an SN ratio

$$\eta_1 = \begin{cases} \dfrac{\frac{1}{r}\left(S_{\beta 1} - V_{e1}\right)}{V_{e1}} & \left(\text{If } S_{\beta 1} > V_{e1}\right) \\ 0 & \left(\text{If } S_{\beta 1} \le V_{e1}\right) \end{cases} \quad \cdots \text{ Formula 2}$$

where
effective number of replications

$$r = M_1^2 + M_2^2 + \cdots + M_l^2$$

total variation

$$S_{T1} = X_{11}{}^2 + X_{21}{}^2 + \cdots + X_{l1}{}^2$$

variation of the proportional

$$S_{\beta 1} = \frac{\left(M_1 X_{11} + M_2 X_{21} + \cdots + M_l X_{l1}\right)^2}{r}$$

error variation

$$S_{e1} = S_{T1} - S_{\beta 1}$$

error variance

$$V_{el} = \frac{S_{e1}}{l - 1}$$

Here, the above-mentioned Formula 1 and Formula 2 are formulas used for calculating the proportionality constant 6 and the SN ratio η (the square ratio) for the item 1. Then, calculation similar to that for the item 1 is performed also on the items ranging from the item 2 to the item k. FIG. 3 is a table illustrating an example of the proportionality constant 6 and the SN ratio η (the square ratio) of each item used in the prediction method according to the present invention. In FIG. 3, the proportionality constant 6 and the SN ratio η (the square ratio) for each item calculated by applying the above-mentioned Formula 1 and Formula 2 to each item are illustrated in the form of a table.

Then, by using the proportionality constant 6 and the SN ratio η (the square ratio) for each item, an estimated value for the output of the prediction object for each item is calculated for each member. For the i-th member, an estimated value for the output by the item 1 is expressed by the following Formula 3. Further, similarly, an estimated value is calculated for the item 2 to the item i.

[Mathematical Expression 2]

$$\hat{M}_{i1} = \frac{X_{i1}}{\beta_1} \quad \cdots \text{ Formula 3}$$

Then, a comprehensive estimated value is calculated by using as weighting factors the SN ratios η1, η2, ..., η1 (the square ratios) each serving as the estimation precision for the estimated value of each item. Thus, the comprehensive estimated value of the prediction object for the i-th member is expressed by the following Formula 4.

[Mathematical Expression 3] the comprehensive estimated value

$$\hat{M}_i = \frac{\eta_1 \times \frac{X_{i1}}{\beta_1} + \eta_2 \times \frac{X_{i2}}{\beta_2} + \cdots + \eta_k \times \frac{X_{ik}}{\beta_k}}{\eta_1 + \eta_2 + \cdots + \eta_k} (i = 1,2,\cdots,l) \quad \cdots \text{ Formula 4}$$

FIG. 4 is a table illustrating an example of the actual value and the comprehensive estimated value of the prediction object used in the prediction method according to the present invention. FIG. 4 is a table illustrating in a list form the actual value of the prediction object indicating the actual data or the normalized data of each member and the comprehensive estimated value calculated according to the above-mentioned Formula 4. Then, by using the actual value and the comprehensive estimated value of the prediction object illustrated in the table of FIG. 4, the SN ratio η (db) of the comprehensive estimated value is allowed to be calculated according to the following Formula 5.

[Mathematical Expression 4]

the SN ratio of the comprehensive estimated value

$$\eta = 10 \log \left( \frac{\frac{1}{r}\left(S_\beta - V_e\right)}{V_e} \right) (db) \quad \cdots \text{ Formula 5}$$

where

linear function

$$L = M_1\hat{M}_1 + M_2\hat{M}_2 + \cdots + M_l\hat{M}_l$$

effective number of replications

$$r = M_1^{\,2} + M_2^{\,2} + \cdots + M_l^{\,2}$$

total variation

$$S_T = \hat{M}_1^{\,2} + \hat{M}_2^{\,2} + \cdots + \hat{M}_l^{\,2} \quad (f = l)$$

variation of the proportional

$$S_\beta = \frac{L^2}{r} \quad (f = 1)$$

error variation

$$S_e = S_T - S_\beta \quad (f = l - 1)$$

error variance

$$V_e = \frac{S_e}{l - 1}$$

As such, a comprehensive estimation formula is allowed to be derived as a prediction formula representing the relation between the data of the item and the comprehensive estimated value of the prediction object. Nevertheless, the comprehensive estimation formula using all items related to the prediction object does not necessarily have the highest prediction accuracy. Thus, in order that the percent contribution to the influence on the prediction object should be increased so that the prediction accuracy should be improved, a suitable combination of items need be selected from among all items.

Here, the prediction formula is premised on a situation that the relation between the item and the prediction object has linearity. Nevertheless, the relation between the item and the prediction object does not necessarily have linearity. As a result, in some cases, the predicted value and the actual measurement value of the prediction object deviate from each other so that the prediction accuracy is degraded. Thus, in the present invention, when necessary, in place of the prediction formula representing a linear relation, a prediction formula representing a nonlinear relation may be used. That is, a prediction formula approximating the relation between the prediction object and the item in a secondary expression may be used as a prediction formula representing a nonlinear relation in place of the prediction formula representing a linear relation.

A detailed technique for a case that the prediction formula representing a nonlinear relation is used is described below. When a nonlinear relation is present between the item X and the prediction object y, normalization processing is performed in which the average of y and the average of X are calculated as the unit space data serving as the reference and then the average is subtracted from each data of y and X. Then, by using the values of X varying relative to y, approximation is performed with a polynomial such as a secondary expression. Then, the data of X is converted by using the approximated values. That is, it is understood that in the case of a linear relation, the intact data or alternatively the data of simply normalized X is applied to Formula 4 but that in the nonlinear case, the data of X having undergone data conversion is applied to Formula 4.

FIG. 5 is an example of a factor effect diagram used in the prediction method according to the present invention. FIG. 5 is a factor effect diagram using an orthogonality table of a two-level system indicating a selection method for items. The horizontal axis indicates items serving as objects of selection and the vertical axis indicates the SN ratio of the comprehensive estimated value. Then, the SN ratio is illustrated for each item. Further, in the orthogonality table illustrated in FIG. 5, for each item, the SN ratio of the comprehensive estimated value to each data including the data of the item, that is, the strength of correlation with the prediction object, is illustrated on the left-hand side and the SN ratio of the comprehensive estimated value to each data excluding the data of the item is illustrated on the right-hand side. Yet detailed description is given below. In the example illustrated in FIG. 5, 36 items are adopted objects of selection. Thus, the number of possible combinations of selection of items is $2^{36}$-1. For each of such combinations, the SN ratio of the prediction object to one or a plurality of items is derived. Then, the average of the SN ratios of combinations each including the object item and the average of the SN ratios of combinations each excluding the item are calculated. In FIG. 5, for each item, the average of the SN ratios including the data of the item calculated as described above is illustrated on the left-hand side and the average of the SN ratios excluding the data of the item is illustrated on the right-hand side.

FIG. 6 is a graph illustrating an example of influence on the factorial effect of each item used in the prediction method according to the present invention. In the graph illustrated in FIG. 6, the horizontal axis indicates items serving as objects of selection and the vertical axis indicates the factorial effect value. Then, the degree of the factorial effect value is illustrated for each item. The factorial effect value indicated on the vertical axis of FIG. 6 indicates, in the SN ratio of the comprehensive estimated value representing the strength of correlation of the prediction object in db unit in FIG. 5, the SN ratio on the left-hand side relative to the SN ratio on the right-hand side, that is, a value obtained by subtracting the SN ratio on the left-hand side from the SN ratio on the right-hand side. Thus, in FIG. 6, an item whose factorial effect value is positive indicates that when the item is used, the SN ratio of the comprehensive estimated value increases. For example, in a method referred to as a two-sided T-method, such items whose factorial effect value is positive are selected alone and then analysis by the T-method is performed. Nevertheless, the inventor of the present application has found that the method that such items whose factorial effect value is positive are selected alone is not necessarily an optimal selection method.

FIG. 7 is a graph illustrating an example of the relation between the number of selected items and the SN ratio of the comprehensive estimated value in the prediction method according to the present invention. In FIG. 7, the horizontal axis indicates the number of selected items and the vertical axis indicates the SN ratio of the comprehensive estimated value. Then, the relation between these is illustrated. Here, the selection of items indicates that items in a number expressed by the number of selected items are selected in descending order of the factorial effect. That is, when the number of selected items is 10, it is indicated that an item whose factorial effect is the maximum up to an item having the tenth highest value are selected. Further, the number 19 of selected items indicated by a dotted line with an arrow illustrates the SN ratio of a case that items whose factorial effect is positive are selected alone in FIG. 6. As illustrated in FIG. 7, the SN ratio is not necessarily monotonically increasing or monotonically decreasing relative to the number of selected items. Further, even when items whose factorial effect is positive are selected alone, the SN ratio does not necessarily become the maximum. In the example illustrated as a graph in FIG. 7, the SN ratio becomes the maximum when the number of selected items is set to be 26 as indicated by a solid line with an arrow.

FIG. 8 is a graph illustrating an example of the SN ratio and the percent contribution of the comprehensive estimated value to the selected items in the prediction method according to the present invention. FIG. 8A illustrates the SN ratios of the comprehensive estimated value of a case that the 26 items maximizing the SN ratio are selected that are used in the prediction method according to the present invention, a case that items whose factorial effect is positive are selected alone, and a case that all items are selected. Further, FIG. 8B illustrates the percent contributions of a case that the 26 items maximizing the SN ratio are selected that are used in the prediction method according to the present invention, a case that items whose factorial effect is positive are selected alone, and a case that all items are selected. As seen also from FIGS. 8A and 8B, when items are selected in a number equal to the number of items maximizing the SN ratio used in the prediction method according to the present invention, the SN ratio and the percent contribution are the most excellent values.

FIG. 9 is a graph conceptually illustrating an example of processing of determining an optimal value for the number of selected items in the prediction method according to the present invention. FIG. 9 illustrates an example of the processing of determining an optimal value for the number of selected items in the graph illustrated in FIG. 7. First, a value smaller than or equal to the minimum of the factorial effect values is set up as the initial value of the threshold. In FIG. 9, the horizontal line illustrated as the initial value indicates the initial value of the threshold. Then, items whose factorial effect value is greater than or equal to the threshold are selected. In a case that the minimum of the factorial effect is set up as the initial value of the threshold, all items are selected at this stage. Then, the SN ratio of the comprehensive estimated value concerning the prediction object to the data of the selected items is calculated. Then, the set-up threshold is reset to a value increased by a given value. Then, items whose factorial effect value is greater than or equal to the threshold having been reset are re-selected. Such processing is repeated until the threshold becomes greater than or equal to the maximum of the factorial effect values, that is, reaches the horizontal line indicated by i in FIG. 9. As a result, the SN ratio of the comprehensive estimated value to the data of a plurality of selected items is allowed to be calculated for each value of the number of items. Here, the initial value of the threshold may be set to be greater than or equal to the maximum of the factorial effect values and then items greater than or equal to the set-up threshold may be selected. Then, after calculating the SN ratio of the comprehensive estimated value, the threshold may be reset to a value reduced by a given value.

Next, the prediction method according to the present invention is described below for a mode of realization using a device such as a computer of diverse kind. FIG. 10 is a block diagram illustrating an exemplary configuration of a prediction device of the present invention. Numeral 1 in FIG. 10 indicates a prediction device employing the prediction method of the present invention. The prediction device 1 is constructed from a computer of diverse kind like a personal computer. The prediction device 1 comprises various mechanisms including a control section 10, a recording section 11, an input section 12, and an output section 13.

The control section 10 is a mechanism such as a CPU controlling the entire device and executing various arithmetic operations.

The recording section 11 indicates various recording means recording various information and is a mechanism such as a volatile memory like various RAMs temporarily recording information and a nonvolatile memory like a ROM and a hard disk drive. Further, any other device such as an external hard disk drive, an optical disk drive, and a file server connected through a communication network may be used as the recording section 11. That is, the recording section 11 mentioned here is a generic term of one or a plurality of information recording media allowed to be accessed from the control section 10.

Here, the recording section 11 records a prediction program 2 of the present invention containing various procedures of realizing the prediction method of the present invention. Further, a part of the recording area of the recording section 11 is used as a database (DB) 110 recording data concerning the prediction object and the plurality of items. Then, the control section 10 is allowed to access the database 110 when necessary. The database 110 records the data, for example, in the form of a table illustrated in FIG. 4.

The input section 12 is a mechanism such as a keyboard and a mouse receiving an operation input from a user.

The output section 13 indicates various output mechanisms such as a display mechanism like a monitor and a print mechanism like a printer.

Then, when executing the various procedures contained in the prediction program 2 of the present invention recorded in the recording section 11 under the control of the control section 10, the computer operates as the prediction device 1 of the present invention.

Next, prediction processing using the prediction device 1 of the present invention is described below. FIG. 11 is a flow chart illustrating an example of prediction processing performed by the prediction device 1 of the present invention. Under the control of the control section 10 executing the prediction program 2, the prediction device 1 executes the prediction processing illustrated below.

The control section 10 receives input of data concerning the prediction object and the plurality of items from the input section 12, and then records the received data of the prediction object and the plurality of items into the database 110 of the recording section 11 (S101). Here, each data to be recorded into the database 110 is not limited to that inputted through the input section 12 and may be input data received from any other device. Further, the input data may be read from any other information recording medium.

On the basis of the data of the prediction object and the plurality of items recorded in the database 110 of the recording section 11, the control section 10 generates a time difference model (S102). The time difference model generated at step S102 is a model in which, as described in FIG. 1, correspondence is assigned between the data of each item and the data of the prediction object after a given period of the data of the item. That is, in a case that the recording contents of the database 110 at an early stage store the data of the items and the prediction object at the same time in a manner of being in correspondence to each other, the time difference model is allowed to be generated by assigning the correspondence in a state that the data of the prediction object is shifted by a given period. In the time difference model generated at this time, when necessary, the data of each item may be normalized by performing an arithmetic operation like subtraction by the average of the data of the items. Here, in a case that the data of the prediction object and each item recorded into the database 110 at first is a time difference model, this processing may be omitted.

The control section 10 calculates the proportionality constant and the SN ratio (the square ratio) for each item by using the above-mentioned Formula 1 and Formula 2 (S103).

Further, the control section 10 calculates the estimated value for the output of the prediction object for each member according to the above-mentioned Formula 3 by using the proportionality constant and the SN ratio (the square ratio) for each item (S104).

Further, on the basis of the above-mentioned Formula 4, the control section 10 calculates the comprehensive estimated value by using as a weighting factor the SN ratio (the square ratio) serving as the estimation precision for the estimated value of each item (S105).

Further, on the basis of the above-mentioned Formula 5, the control section 10 calculates the SN ratio (db) of the comprehensive estimated value from the data and the comprehensive estimated value of the prediction object (S106).

Further, the control section 10 derives as the factorial effect value for each item the SN ratio of the comprehensive estimated value to each data including the data of the item relative to the SN ratio of the comprehensive estimated value to each data excluding the data of the item (S107). At step S107, as illustrated by using FIG. 5, for each item, a value obtained when the SN ratio of a case that the item is included is subtracted from the SN ratio of a case that the item is excluded is derived as the factorial effect value. Here, the SN ratio of the comprehensive estimated value is the strength of correlation of the prediction object and is a value expressed as the logarithm of a value proportional to the inverse of the variance. Here, the processing of steps S103 to S106 is one adopting an existing T-method. However, a feature of the present invention is that the time difference model is employed.

Further, the control section 10 calculates for each value of the number of items the SN ratio of the comprehensive estimated value to the data of the plurality of items selected in descending order of the factorial effect value (S108). Detailed processing of calculating for each value of the number of items the SN ratio of the comprehensive estimated value calculated at step S108, that is, the strength of correlation of the prediction object to the data of the plurality of items, is described later.

Further, on the basis of the SN ratio of the comprehensive estimated value for each value of the number of items, the control section 10 determines the number of items (S109). As described by using the graph illustrated in FIG. 7, the determination processing of step S109 is the processing of determining the number of items that maximizes the SN ratio of the comprehensive estimated value, that is, the strength of correlation of the prediction object.

Further, the control section 10 selects items in the number of items determined at step S109, in descending order of the factorial effect value derived at step S107 (S110).

Further, on the basis of the data of the items selected at step 110, the control section 10 derives a prediction formula based on: the weight for each item based on the SN ratio of the comprehensive estimated value to the data of each selected item; and the proportionality constant for each item representing the relation between the data of each selected item and the prediction object (S111). The prediction formula derived at step S111 is the comprehensive estimation formula indicated as the above-mentioned Formula 4. This prediction formula is used also in the existing T-method. Further, as described above, the employed prediction formula is not necessarily a linear expression representing a linear relation between the item and the prediction object. That is, a prediction formula using a quadratic expression may be derived that represents a nonlinear relation between the item and the prediction object.

Then, on the basis of the prediction formula derived at step S111, the control section 10 predicts the time-dependent change of the prediction object (S112). The prediction result is outputted from the output section 13 and then recorded into the recording section 11. In the prediction at step S112, prediction is performed by using the data of the predicted value of the past, the present, or the future of each item serving as a basis of prediction. In the present invention, the use of the time difference model permits prediction of the prediction object after elapse of a given time from the time concerning the data of each item. Further, prediction of the time-dependent change is achieved by suitable repetition of the calculation processing using the prediction formula. Here, in a case that conversion processing such as normalization and logarithmic conversion has been performed in advance of the calculation, the inverse transformation of the conversion need be performed on the calculation result of the prediction object.

FIG. 12 is a flow chart illustrating an example of prediction processing performed by the prediction device 1 of the present invention. Under the control of the control section 10 executing the prediction program 2, as detailed processing of the processing of step S108 in the prediction processing described by using FIG. 11, the prediction device 1 executes the processing illustrated below. Here, the processing illustrated by using the flow chart of FIG. 12 corresponds to the processing described by using the graph of FIG. 9.

The control section 10 sets up as the initial value of the threshold a value smaller than or equal to the minimum of the factorial effect values derived at step S107 (S201). Step S201 indicates a state that the initial value has been set up in FIG. 9. Here, as illustrated in FIG. 9, when the minimum of the factorial effect values is set up as the threshold, the amount of processing is allowed to be reduced.

Further, the control section 10 selects items whose calculated factorial effect value is greater than or equal to the set-up threshold (S202). In a case that the minimum of the factorial effect values is set up as the initial value of the threshold, all items are selected at the stage of the first step S202.

Further, the control section 10 calculates the strength of correlation of the prediction object to the data of the items selected at step S202, that is, the SN ratio of the comprehensive estimated value (S203), and then records the calculated SN ratio of the comprehensive estimated value into the recording section 11 in a manner of being in correspondence to the number of items (S204).

Further, the control section 10 judges whether the calculation of the SN ratio of the comprehensive estimated value to the selected items has been completed (S205). Step S205 is determination of the end of repeat processing and is the processing of judging whether the calculation processing for the SN ratio of the comprehensive estimated value for each value of the number of items has been completed for each value of the number of items. For example, a completion condition may be set up suitably like a condition that the threshold set up takes a value greater than or equal to the maximum of the factorial effect values, a condition that a factorial effect value greater than or equal to the threshold becomes no longer present as a result of reset of the threshold described later, and a condition that the number of comprehensive estimated values calculated for each value of the number of items becomes equal to the number of items serving as objects of selection.

At step S205, it is judged that the calculation of the SN ratio of the comprehensive estimated value to the selected items has been completed (S205: YES), the control section 10 terminates the processing. That is, the processing of step S108 is terminated and then the processing of step S109 is executed.

At step 205, when it is judged that calculation of the SN ratio of the comprehensive estimated value to the selected items is not completed and hence calculation of the SN ratio of the comprehensive estimated value for a smaller value of the number of items is necessary (S205: NO), the control section 10 resets the set-up threshold to a value increased by a given value (S206) and then goes to step S202 so as to repeat the subsequent processing.

Here, a mode has been described that the initial value of the threshold is set to be smaller than or equal to the minimum of the factorial effect values and then the threshold is reset to a value increased by a given value at each time. Instead, processing reverse to this may be employed. That is, the initial value of the threshold may be set to be greater than or equal to the maximum of the factorial effect values and then items whose calculated factorial effect value is greater than or equal to the set-up threshold may be selected and then the threshold may be reset to a value reduced by a given value at each time. As such, prediction processing is executed by the prediction device according to the present invention.

Next, a detailed implementation example in which the prediction method of the present invention is applied is described below.

(Implementation Example 1)

As Implementation Example 1, description is given for an example in which the prediction method of the present invention is applied to demand prediction for construction machines. FIG. 13 is a table illustrating the contents of items according to Implementation Example 1 in which the prediction method of the present invention is applied. In Implementation Example 1, the prediction object is set to be the "number of shipments of construction machines" and the items related to the prediction object are set to be various economic indicators. The items serving as economic indicators are as illustrated in FIG. 13 and set to be "Japan unemployment rate (%)", "domestic bank loan rate (%)", and the like. In each of these items, monthly data is related as a member. Here, the item indicating the month such as "January" and "February" indicates correspondence of each item related as a member to any month. In the case of the month of attention, "1" is recorded as flag data into the item. In the case of not being the month of attention, "0" is recorded. For example, for a member related to an economic indicator of January, the data of the item of "January" is set to be "1" and the data of the items of the other months are set to be "0". In Implementation Example 1, the number of shipments of construction machines serving as the prediction object is predicted on the basis of the total of 36 items consisting of 24 items concerning economic indicators (omitted in part or changed in detail in FIG. 13) and 12 items concerning months. Further, at the time of application of the prediction method of the present invention, in addition to prediction based on a linear relation, prediction has also been performed in which a nonlinear relation is taken into consideration. Further, in addition to a case that the actual value is used for the number of shipments of construction machines serving as the prediction object, prediction has been performed also in a case that the logarithmic value of the number of shipments is used.

FIG. 14 is an explanation diagram schematically illustrating the time difference model of Implementation Example 1 in which the prediction method of the present invention is applied. The time difference model according to Implementation Example 1, correspondence is assigned between each item and the prediction object with adopting a time difference of one year. More specifically, correspondence is assigned between the data of each item such as an economic indicator for two years and the number of shipments of construction machines for two years after elapse of one year. The example of FIG. 14 schematically illustrates correspondence between each item in 2004 to 2005 and the number of shipments of construction machines in 2005 to 2006.

FIG. 15 is a graph illustrating the relation between the number of selected items and the SN ratio of the comprehensive estimated value in Implementation Example 1 in which the prediction method of the present invention is applied. As illustrated in FIG. 15, in Implementation Example 1, when the number of selected items is 24 as indicated by a solid line with an arrow, the SN ratio of the comprehensive estimated value becomes 28.0 and takes the maximum. Here, in a case that items whose factorial effect value is positive are selected alone, as indicated by a dotted line with an arrow, the number of selected items becomes 25 and the SN ratio of the comprehensive estimated value becomes 27.3. Further, in a case that all items are selected, as indicated by a dash-dotted line with an arrow, the SN ratio of the comprehensive estimated value becomes 25.5. Here, as for the values illustrated in FIG. 15, for the purpose of reducing a fluctuation rate as the data, logarithmic values have been used in place of the actual values for the number of shipments. Further, calculation has been performed on the basis of the prediction formula representing a nonlinear relation.

FIG. 16 is a graph illustrating a time-dependent change of the actual value and the predicted value in Implementation Example 1 in which the prediction method of the present invention is applied. In FIG. 16, the horizontal axis is the time axis and the vertical axis indicates the number of shipments of construction machines per month (machines/month). Then, this graph illustrates a change of the actual value and the predicted value. Prediction of the number of shipments is performed for January 2007 and later. However, it is seen that the actual change of the number of shipments is approximated by the prediction. Here, the percent contribution is 0.79 and the SN ratio of the comprehensive estimated value is 12.7db.

FIG. 17 is a distribution diagram illustrating the relation between the actual value and the predicted value in Implementation Example 1 in which the prediction method of the present invention is applied. FIG. 17 illustrates the relation between the actual value and the predicted value for the data of January 2007 and later illustrated in FIG. 16. As illustrated in FIG. 17, the relation between the actual value and the predicted value is distributed along a diagonal line indicating coincidence. Here, the data used in FIGS. 16 and 17 is based on the prediction using the prediction formula representing a nonlinear relation and the logarithmic value of the actual value.

FIG. 18 is a graph summarizing results of prediction accuracies of Implementation Example 1 in which the prediction method of the present invention is applied. Here, the vertical axis indicates the precision of prediction. The right-hand side indicates a value obtained as the SN ratio and the left-hand side indicates a value obtained as the percent contribution. In FIG. 18, the value indicated by a square is the SN ratio and the value indicated by a circle is the percent contribution. In FIG. 18, the two data pieces illustrated in the left partition indicate the prediction accuracies in the multiple regression analysis illustrated in comparison. Among these, the left-hand side indicates the prediction accuracy of a case that the actual value is used and the right-hand side indicates the prediction accuracy of a case that the logarithmic value is used. The three data pieces illustrated in the second partition from the left indicate the prediction accuracies of a case that the prediction formula representing a linear relation and the actual value are used in the prediction method using the T-method. Among these, the left-hand side indicates the prediction accuracy of a case that all items are used. The center indicates the prediction accuracy of a case that items whose factorial effect value is positive are used alone. The right-hand side indicates the prediction accuracy of a case that the number of items maximizing the factorial effect value is selected by applying the prediction method of the present invention. The three data pieces illustrated in the third partition from the left indicate the prediction accuracies of a case that the prediction formula representing a linear relation and the logarithmic value are used in the prediction method using the T-method. Among these, the left-hand side indicates the prediction accuracy of a case that all items are used. The center indicates the prediction accuracy of a case that items whose factorial effect value is positive are used alone. The right-hand side indicates the prediction accuracy of a case that the number of items maximizing the factorial effect value is selected by applying the prediction method of the present invention. The three data pieces illustrated in the partition of right-most side indicate the prediction accuracies of a case that the prediction formula representing a nonlinear relation and the logarithmic value are used in the prediction method using the T-method. Among these, the left-hand side indicates the prediction accuracy of a case that all items are used. The center indicates the prediction accuracy of a case that items whose factorial effect value is positive are used alone. The right-hand side indicates the prediction accuracy of a case that the number of items maximizing the factorial effect value is selected by applying the prediction method of the present invention.

As seen from FIG. 18, in the prediction method using the T-method, the highest prediction accuracy is obtained when the prediction method of the present invention is used. Further, obviously, the prediction accuracy of a case that the prediction method of the present invention is used is higher than that of a case that the multiple regression analysis is performed on the same conditions.

(Implementation Example 2)

As Implementation Example 2, description is given for an example that the prediction method of the present invention is applied to the prediction of the North America sales of engines for refrigerators. FIG. 19 is a table illustrating the contents of items according to Implementation Example 2 in which the prediction method of the present invention is applied. In Implementation Example 2, the prediction object is set to be the "North America number of shipments of engines for refrigerators" and the items related to the prediction object are set to be various economic indicators. In each of these items, monthly data is related as a member. Similarly to Implementation Example 1, an item indicating the month is provided. In Implementation Example 2, the North America number of shipments of engines for refrigerators serving as the prediction object is predicted on the basis of the total of 52 items consisting of 40 items concerning economic indicators (omitted in part or changed in detail in FIG. 19) and 12 items concerning months.

FIG. 20 is a graph illustrating an example of influence on the factorial effect of each item according to Implementation Example 2 in which the prediction method of the present invention is applied. In the graph illustrated in FIG. 20, the horizontal axis indicates each item and the vertical axis indicates the factorial effect value. Then, the factorial effect value for each item is illustrated in db unit. Here, the solid line illustrated slightly above the position where the factorial effect value becomes 0 indicates the threshold of a case that the SN ratio of the comprehensive estimated value is maximized when the prediction method of the present invention is applied. In this case, the number of items which takes the value greater than or equal to the threshold is 23.

FIG. 21 is a graph illustrating the relation between the number of selected items and the SN ratio of the comprehensive estimated value in Implementation Example 2 in which the prediction method of the present invention is applied. FIG. 21 illustrates the relation between the number of selected items and the SN ratio of the comprehensive estimated value, for the items illustrated in the graph of FIG. 20. In Implementation Example 2, the solid line with an arrow indicates a case that the SN ratio of the comprehensive estimated value is maximized, where 26 items are selected. Further, the dotted line with an arrow indicates a case that items whose factorial effect is positive are selected alone, where 23 items are selected.

FIG. 22 is a graph illustrating the prediction accuracies of Implementation Example 2 in which the prediction method of the present invention is applied. FIG. 22A illustrates each prediction accuracy in terms of the SN ratio of the comprehensive estimated value and FIG. 22B illustrates each prediction accuracy in terms of the percent contribution. In each graph, the left-hand side illustrates a case that the prediction method of the present invention is applied and hence items in the number of items maximizing the SN ratio of the comprehensive estimated value are selected. The center illustrates a case that items whose factorial effect value is positive are selected alone. The right-hand side illustrates a case that all items are selected. As seen from FIGS. 22A and 22B, the highest prediction accuracy is obtained when items are selected according to the prediction method of the present invention.

The embodiment given above is merely an illustrative example of a part of an infinite number of modes of the present application. The configuration of various hardware, the procedure of processing, the formula, the alternative formula, and other condition settings may be designed suitably in accordance with the purpose, the application, and the like. For example, the embodiment has been described for a mode that the SN ratio using the inverse of the variance is employed as a numerical value representing the strength of correlation. However, the present invention is not limited to this and an indicator such as an energy-ratio type SN ratio having a different definition may be employed.

**Description of Reference Numerals**

| | |
|---|---|
| 1 | Prediction device |
| 10 | Control section |
| 11 | Recording section |
| 12 | Input section |
| 13 | Output section |
| 110 | Database |
| 2 | Prediction program |

**Claims**

1. A prediction device that is provided with recording means time-dependently recording data concerning a prediction object varying time-dependently and a plurality of items related to the prediction object and that predicts a change of the prediction object on the basis of the data recorded in the recording means, the prediction device comprising:

   derivation means deriving for each item a factorial effect value representing a strength of correlation of the prediction object to each data including the data of the item relative to a strength of correlation of the prediction object to each data excluding the data of the item;
   calculation means calculating for each value of the number of items a strength of correlation of the prediction object to the data of a plurality of items selected in descending order of the factorial effect value derived by the derivation means;
   determination means determining the number of items on the basis of the strength of correlation for each value of the number of items calculated by the calculation means;
   selection means selecting items in the number of items determined by the determination means, in descending order of the factorial effect value derived by the derivation means; and
   prediction means predicting a change of the prediction object on the basis of the data of the items selected by the selection means.

2. The prediction device according to claim 1, wherein
   the derivation means
   is constructed such as to derive the factorial effect value on the basis of the data of the item and the data of the prediction object after a given period of the data of the item, and
   the prediction means
   is constructed such as to predict a change of the prediction object after elapse of a given period to the data of the item.

3. The prediction device according to claim 1 or 2, wherein
   the calculation means includes:
   means setting up as an initial value of the threshold a value smaller than or equal to the minimum (or greater than or equal to the maximum) of the factorial effect values derived by the derivation means;

first means selecting an item whose calculated factorial effect value is greater than or equal to the set-up threshold; second means calculating a strength of correlation of the prediction object to the data of the selected item; and third means resetting the threshold to be a value increased (or a value reduced) by a given value, and wherein the first means, the second means, and the third means calculate for each value of the number of items the strength of correlation of the prediction object to the data of a plurality of selected items.

**4.** The prediction device according to claim 1 to 3, wherein the prediction means includes means deriving a prediction formula based on a weight for each item based on the strength of correlation of the prediction object to the data of each selected item and a proportionality constant for each item representing a linear relation between the data of each selected item and the prediction object or a nonlinear relation alternative to the linear relation and is constructed such as to derive a change of the prediction object on the basis of the derived prediction formula.

**5.** A prediction method that a prediction device capable of accessing recording means time-dependently recording data concerning a prediction object varying time-dependently and a plurality of items related to the prediction object executes processing of predicting a change of the prediction object on the basis of the data recorded in the recording means, wherein the prediction device performs:

a step of deriving for each item a factorial effect value representing a strength of correlation of the prediction object to each data including the data of the item relative to a strength of correlation of the prediction object to each data excluding the data of the item;
a step of calculating for each value of the number of items a strength of correlation of the prediction object to the data of a plurality of items selected in descending order of the derived factorial effect value;
a step of determining the number of items on the basis of the strength of correlation calculated for each value of the number of items;
a step of selecting items in the determined number of items in descending order of the derived factorial effect value; and
a step of predicting a change of the prediction object on the basis of the data of the selected items.

**6.** A prediction program causing a computer capable of accessing recording means time-dependently recording data concerning a prediction object varying time-dependently and a plurality of items related to the prediction object to execute processing of predicting a change of the prediction object on the basis of the data recorded in the recording means, the prediction program causing the computer to execute:

a procedure of deriving for each item a factorial effect value representing a strength of correlation of the prediction object to each data including the data of the item relative to a strength of correlation of the prediction object to each data excluding the data of the item;
a procedure of calculating for each value of the number of items a strength of correlation of the prediction object to the data of a plurality of items selected in descending order of the derived factorial effect value;
a procedure of determining the number of items on the basis of the strength of correlation calculated for each value of the number of items;
a procedure of selecting items in the determined number of items in descending order of the derived factorial effect value; and
a procedure of predicting a change of the prediction object on the basis of the data of the selected items.

F I G. 1

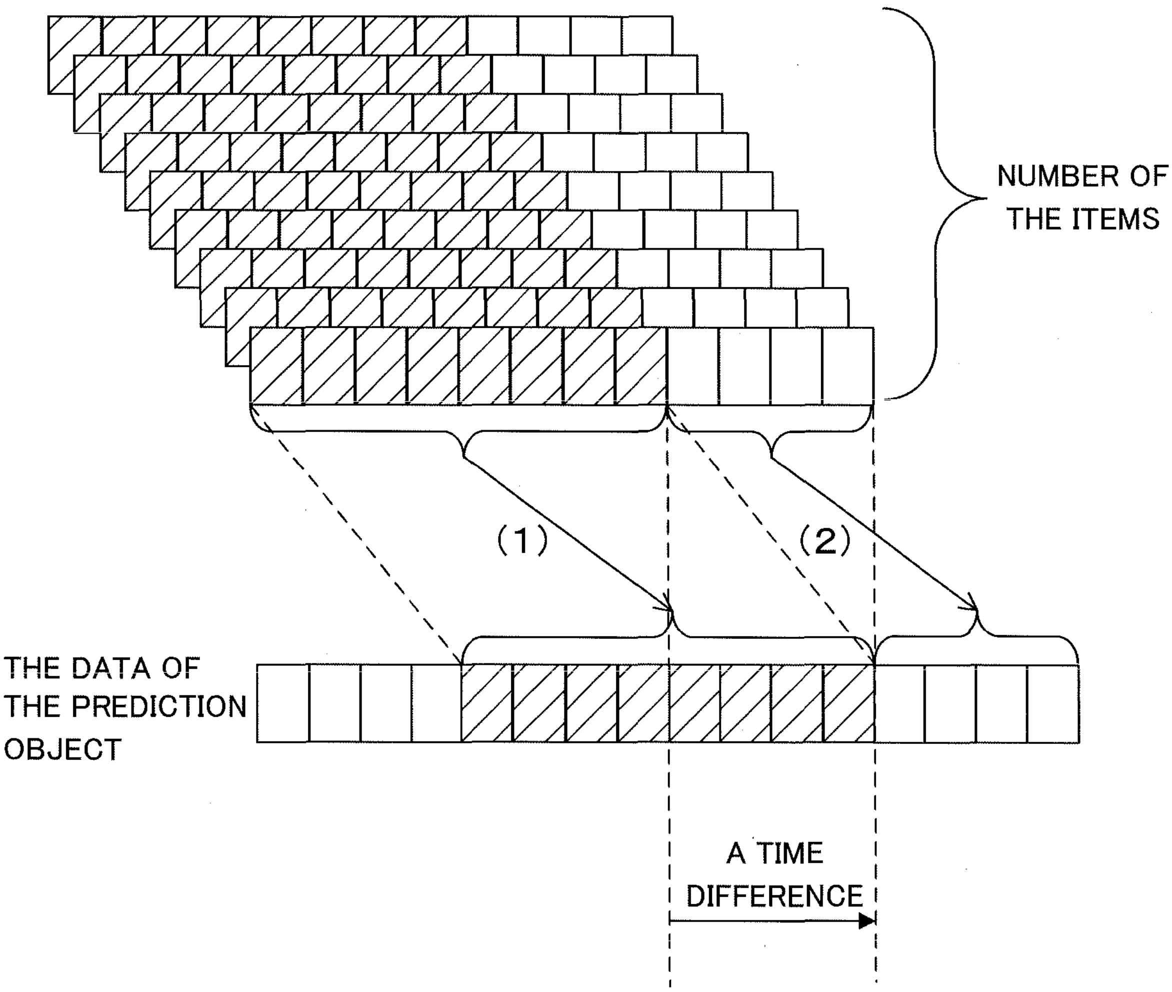
NUMBER OF
THE ITEMS
(1)
(2)
THE DATA OF
THE PREDICTION
OBJECT
A TIME
DIFFERENCE

FIG. 2

| MEMBER | ITEM 1 | ITEM 2 | · · · | ITEM k | PREDICTION OBJECT |
|---|---|---|---|---|---|
| 1 | $X_{11}$ | $X_{12}$ | · · · | $X_{1k}$ | $M_1$ |
| 2 | $X_{21}$ | $X_{22}$ | · · · | $X_{2k}$ | $M_2$ |
| ⋮ | ⋮ | ⋮ | ⋱ | ⋮ | ⋮ |
| $l$ | $X_{l1}$ | $X_{l2}$ | · · · | $X_{lk}$ | $M_l$ |

F I G. 3

| $\beta$, $\eta$ | ITEM 1 | ITEM 2 | ・・・ | ITEM k |
|---|---|---|---|---|
| THE PROPORTIONALITY CONSTANT $\beta$ | $\beta_1$ | $\beta_2$ | ・・・ | $\beta_k$ |
| SN RATIO $\eta$ (THE SQUARE RATIO) | $\eta_1$ | $\eta_2$ | ・・・ | $\eta_k$ |

F I G. 4

| MEMBER | THE ACTUAL VALUE OF THE PREDICTION OBJECT $M$ | THE COMPREHENSIVE ESTIMATED VALUE $\hat{M}$ |
|---|---|---|
| 1 | $M_1$ | $\hat{M}_1$ |
| 2 | $M_2$ | $\hat{M}_2$ |
| ⋮ | ⋮ | ⋮ |
| $l$ | $M_l$ | $\hat{M}_l$ |

F I G. 5

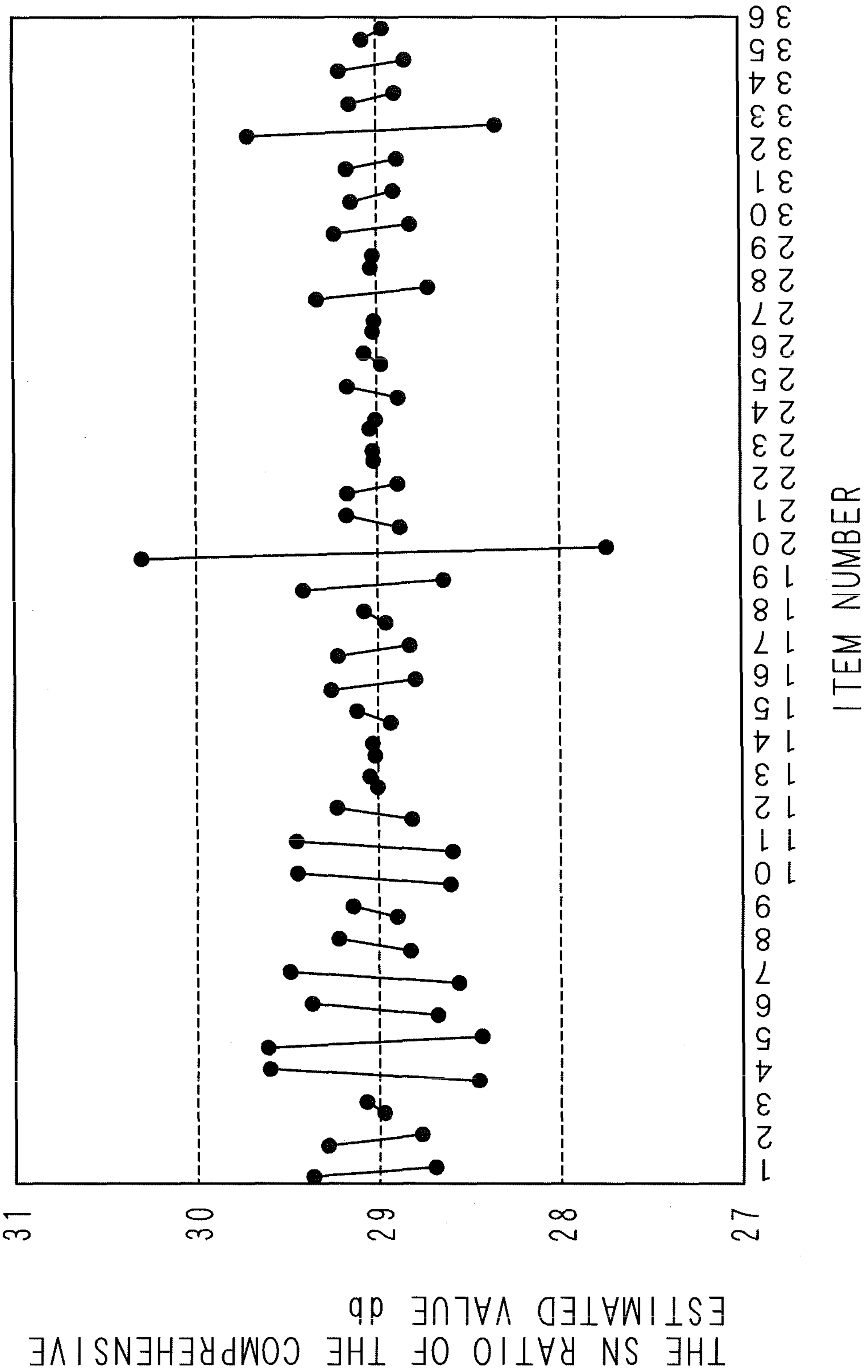
THE SN RATIO OF THE COMPREHENSIVE ESTIMATED VALUE db
31
30
29
28
27
ITEM NUMBER
1 2 3 4 5 6 7 8 9 10 11 12 13 14 15 16 17 18 19 20 21 22 23 24 25 26 27 28 29 30 31 32 33 34 35 36

F I G. 6

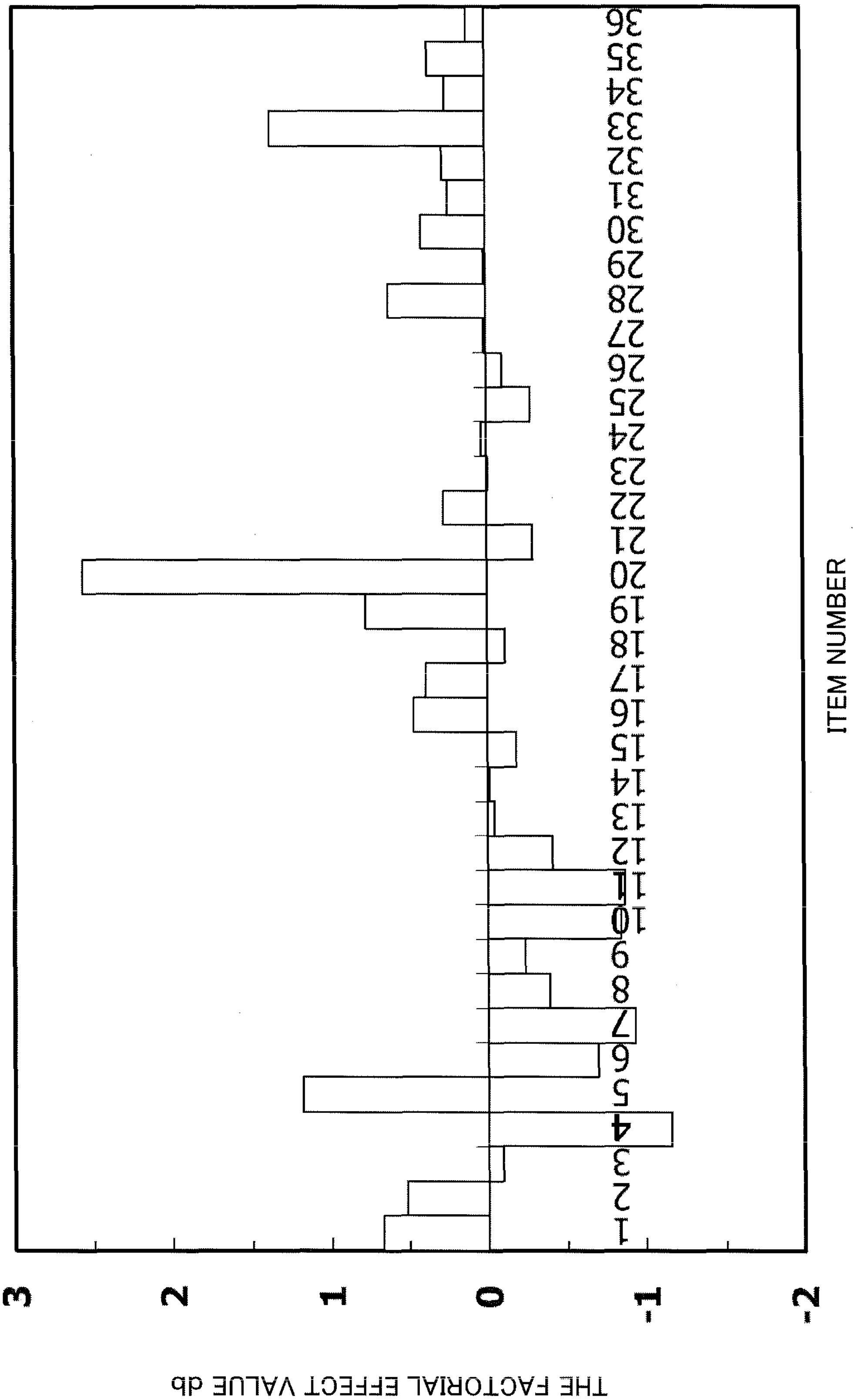
THE FACTORIAL EFFECT VALUE db
3
2
1
0
-1
-2
ITEM NUMBER
1 2 3 4 5 6 7 8 9 10 11 12 13 14 15 16 17 18 19 20 21 22 23 24 25 26 27 28 29 30 31 32 33 34 35 36

F I G. 7

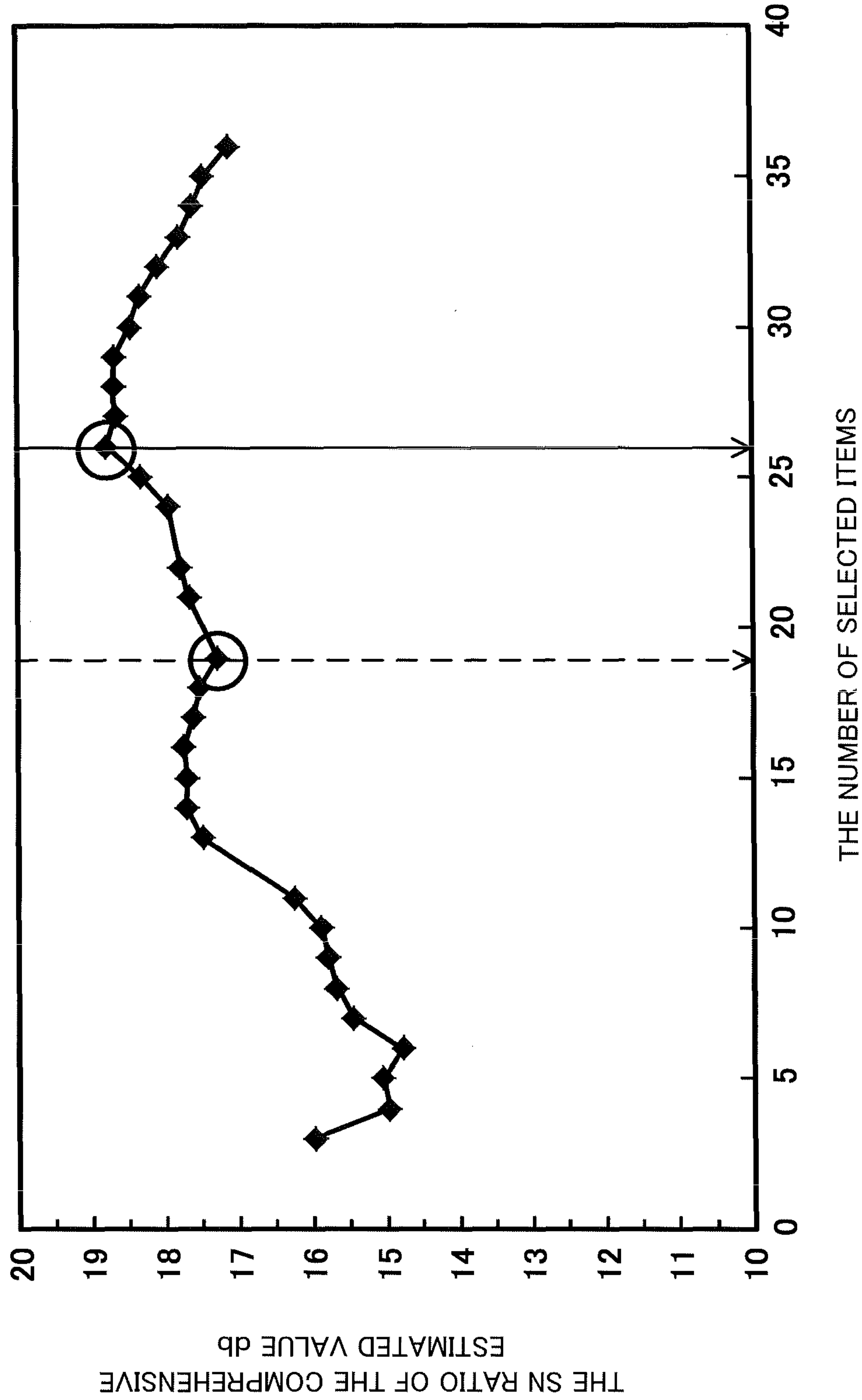
THE SN RATIO OF THE COMPREHENSIVE ESTIMATED VALUE db
20
19
18
17
16
15
14
13
12
11
10
0
5
10
15
20
25
30
35
40
THE NUMBER OF SELECTED ITEMS

FIG. 8A

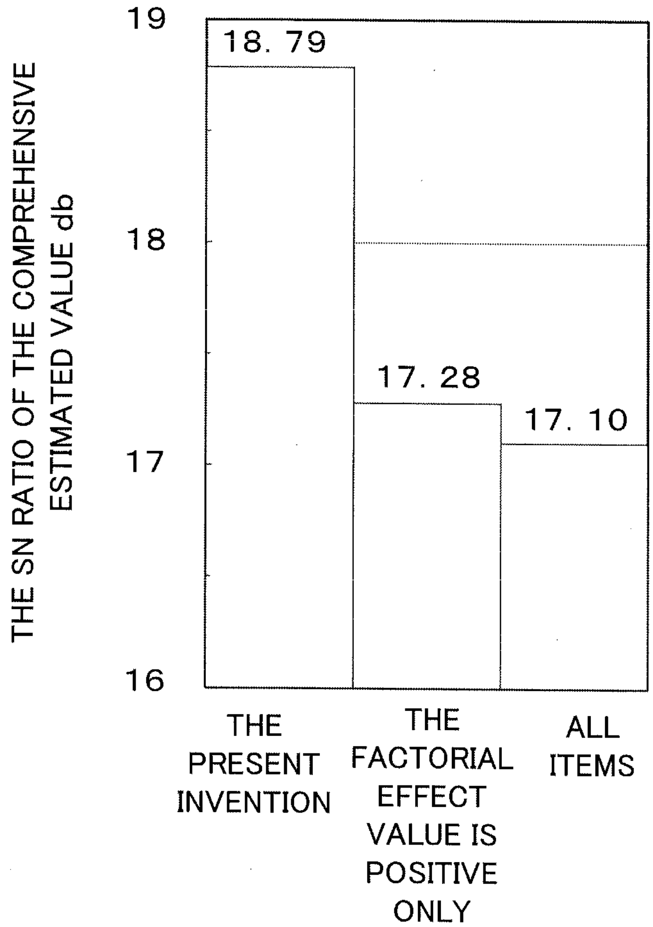
THE SN RATIO OF THE COMPREHENSIVE ESTIMATED VALUE db
19
18
17
16
18. 79
17. 28
17. 10
THE PRESENT INVENTION
THE FACTORIAL EFFECT VALUE IS POSITIVE ONLY
ALL ITEMS

FIG. 8B

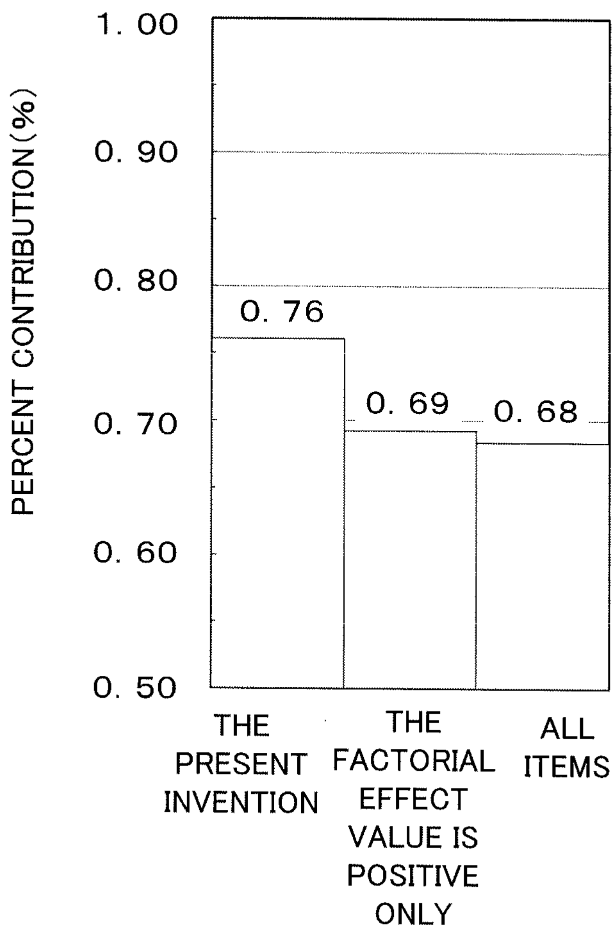
PERCENT CONTRIBUTION (%)
1.00
0.90
0.80
0.70
0.60
0.50
0.76
0.69
0.68
THE PRESENT INVENTION
THE FACTORIAL EFFECT VALUE IS POSITIVE ONLY
ALL ITEMS

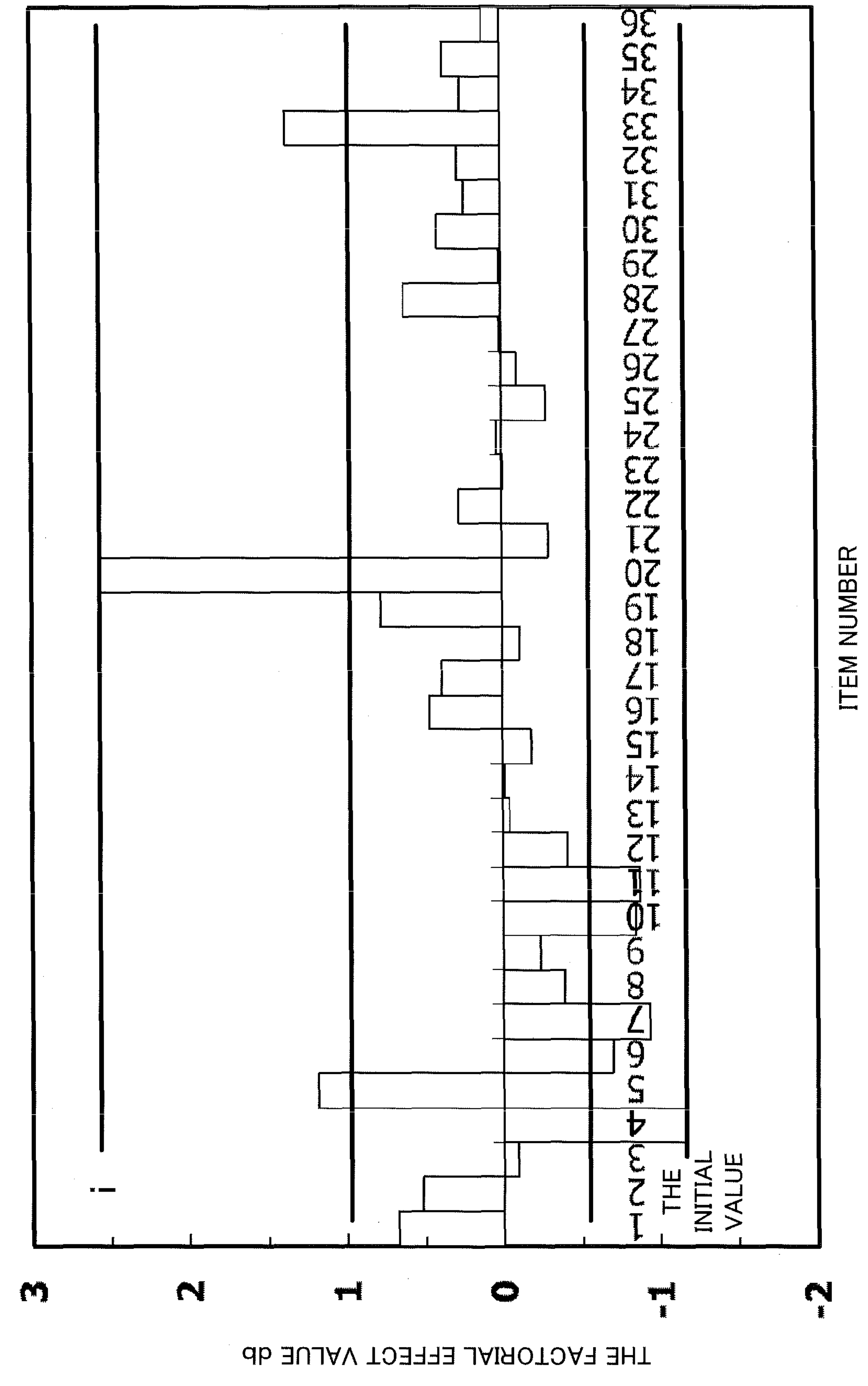
THE FACTORIAL EFFECT VALUE db
3
2
1
0
-1
-2
THE INITIAL VALUE
ITEM NUMBER
1 2 3 4 5 6 7 8 9 10 11 12 13 14 15 16 17 18 19 20 21 22 23 24 25 26 27 28 29 30 31 32 33 34 35 36

F I G. 9

FIG. 10

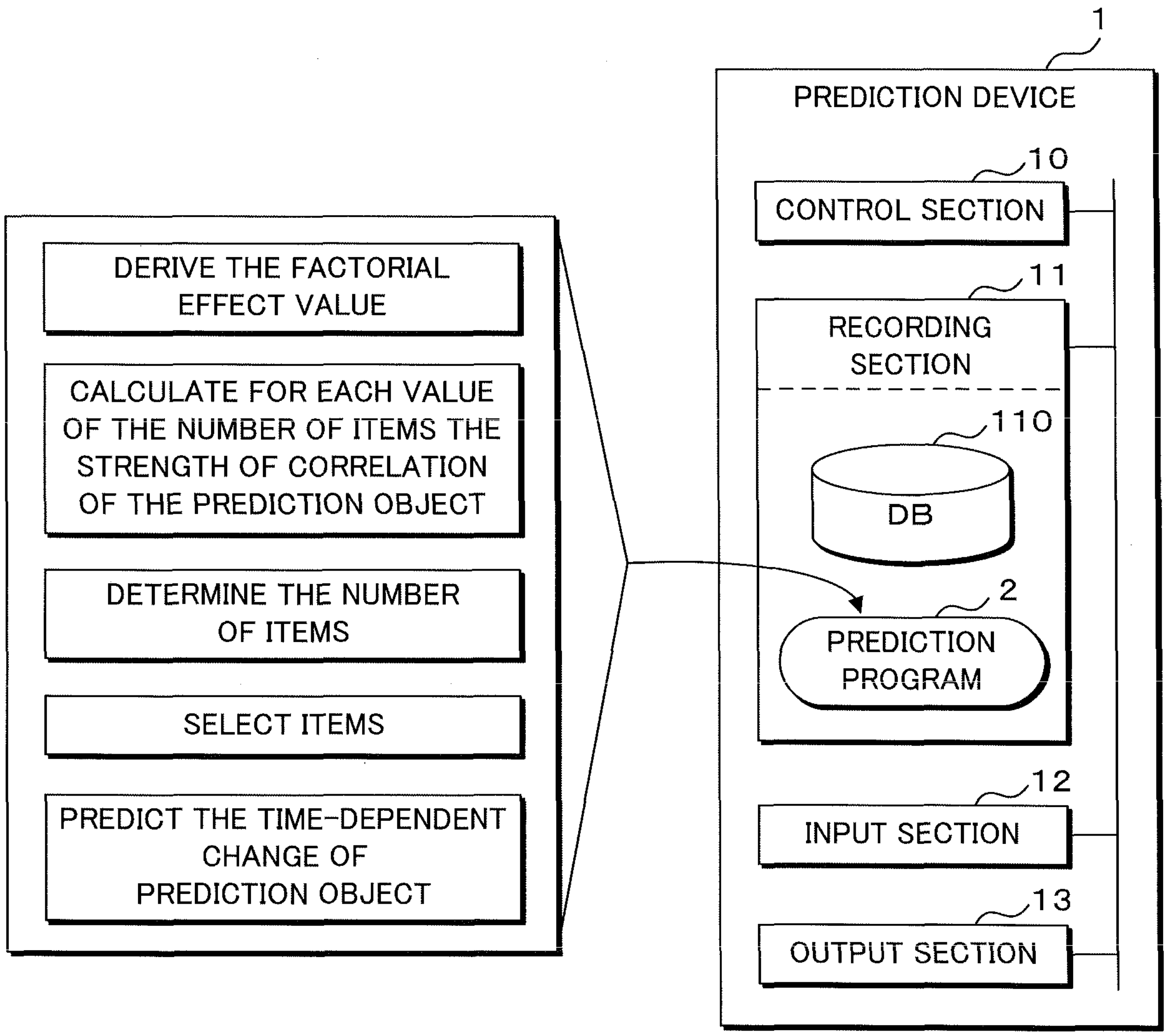
DERIVE THE FACTORIAL EFFECT VALUE
CALCULATE FOR EACH VALUE OF THE NUMBER OF ITEMS THE STRENGTH OF CORRELATION OF THE PREDICTION OBJECT
DETERMINE THE NUMBER OF ITEMS
SELECT ITEMS
PREDICT THE TIME-DEPENDENT CHANGE OF PREDICTION OBJECT
1
PREDICTION DEVICE
10
CONTROL SECTION
11
RECORDING SECTION
110
DB
2
PREDICTION PROGRAM
12
INPUT SECTION
13
OUTPUT SECTION

F I G. 1 1

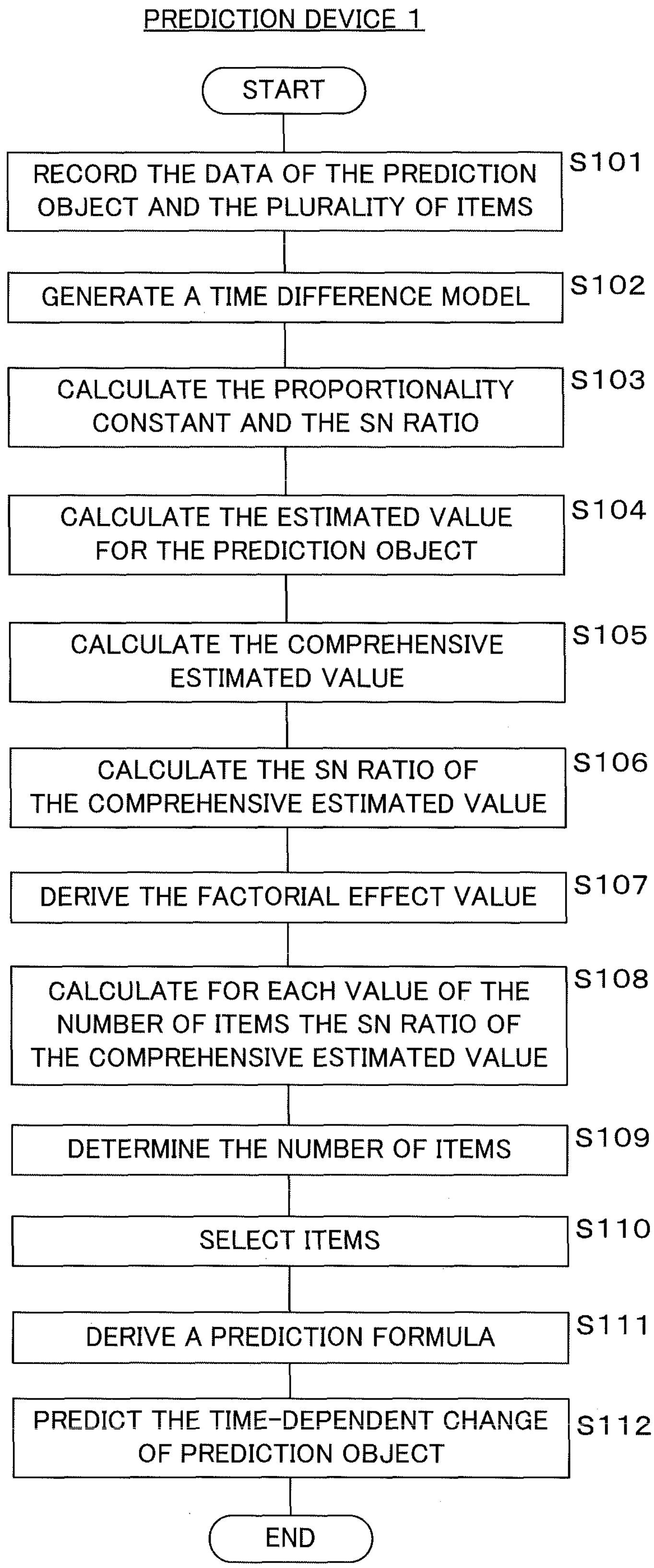
PREDICTION DEVICE 1
START
RECORD THE DATA OF THE PREDICTION OBJECT AND THE PLURALITY OF ITEMS
S101
GENERATE A TIME DIFFERENCE MODEL
S102
CALCULATE THE PROPORTIONALITY CONSTANT AND THE SN RATIO
S103
CALCULATE THE ESTIMATED VALUE FOR THE PREDICTION OBJECT
S104
CALCULATE THE COMPREHENSIVE ESTIMATED VALUE
S105
CALCULATE THE SN RATIO OF THE COMPREHENSIVE ESTIMATED VALUE
S106
DERIVE THE FACTORIAL EFFECT VALUE
S107
CALCULATE FOR EACH VALUE OF THE NUMBER OF ITEMS THE SN RATIO OF THE COMPREHENSIVE ESTIMATED VALUE
S108
DETERMINE THE NUMBER OF ITEMS
S109
SELECT ITEMS
S110
DERIVE A PREDICTION FORMULA
S111
PREDICT THE TIME-DEPENDENT CHANGE OF PREDICTION OBJECT
S112
END

FIG. 12

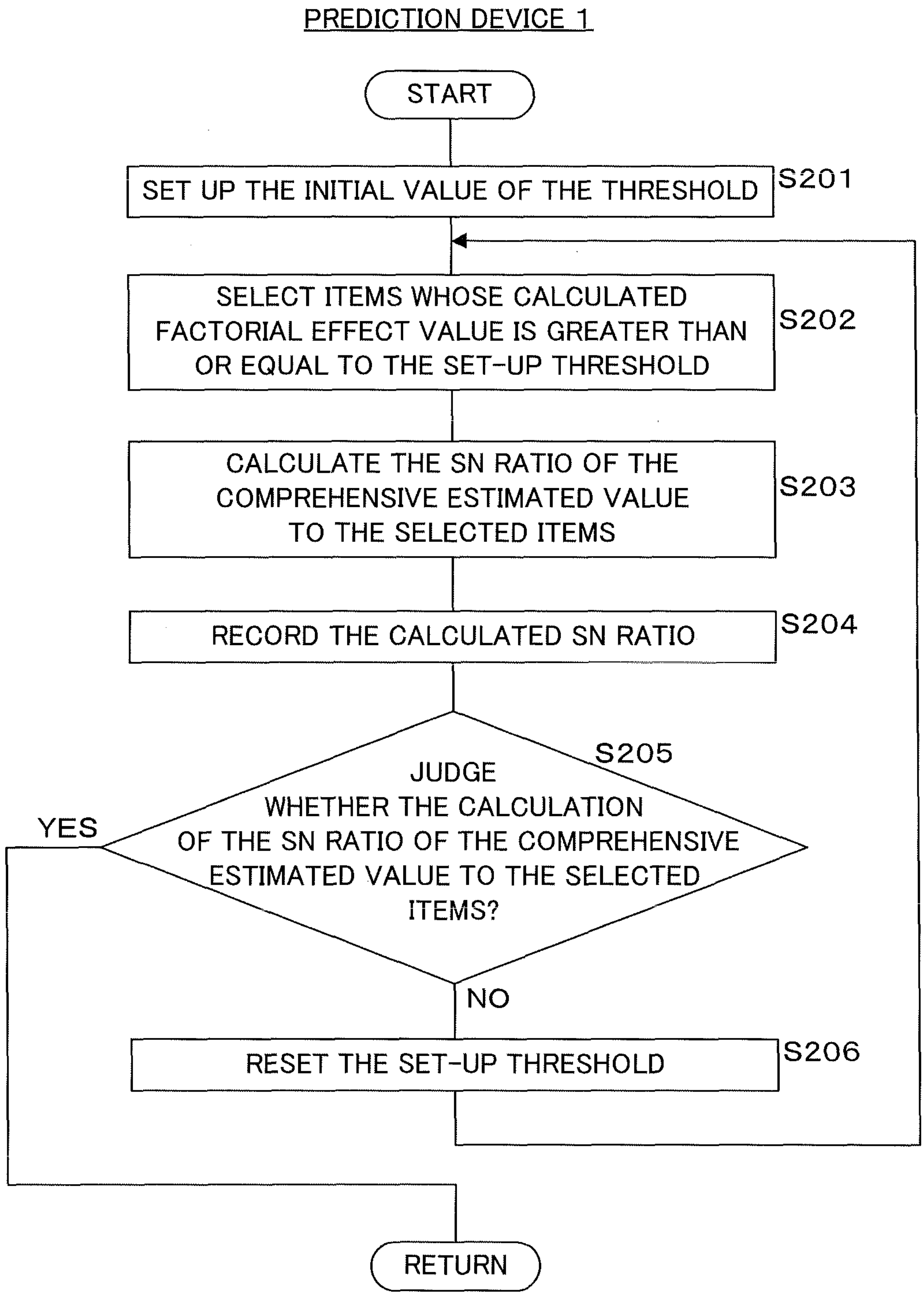
PREDICTION DEVICE 1
START
SET UP THE INITIAL VALUE OF THE THRESHOLD
S201
SELECT ITEMS WHOSE CALCULATED FACTORIAL EFFECT VALUE IS GREATER THAN OR EQUAL TO THE SET-UP THRESHOLD
S202
CALCULATE THE SN RATIO OF THE COMPREHENSIVE ESTIMATED VALUE TO THE SELECTED ITEMS
S203
RECORD THE CALCULATED SN RATIO
S204
JUDGE WHETHER THE CALCULATION OF THE SN RATIO OF THE COMPREHENSIVE ESTIMATED VALUE TO THE SELECTED ITEMS?
S205
YES
NO
RESET THE SET-UP THRESHOLD
S206
RETURN

FIG. 13

| Name of Items |
|---|
| January |
| February |
| March |
| April |
| May |
| June |
| July |
| August |
| September |
| October |
| November |
| December |
| ⋮ |
| Japan unemployment rate (%) |
| Domestic bank lending rate (%) |
| Japan manufacturing orders (1 billion yen) |
| Japan gas oil price (yen/liter) amount (1 billion yen) |
| At the end Nikkei Stock Average |
| Exchange rate (end of the month, against the U.S.dollar ) |
| Japan export amount (one billion yen) |
| CI Leading Index |
| CI Coincident Index |
| CI Lagging Index |
| DI Leading Index |
| DI Coincident Index |
| DI Lagging Index |
| DI Cumulated Leading Index |
| DI Cumulated Coincident Index |
| DI Cumulated Lagging Index |
| Japan starts new housing number |
| Japan construction orders ( one billion yen ) |
| ⋮ |
| Japan export marine container |
| Japan company bankruptcies |
| Japan ordinary vehicles new car sales ( units ) |
| Japan truck new vehicle sales ( units ) |

F I G. 1 4

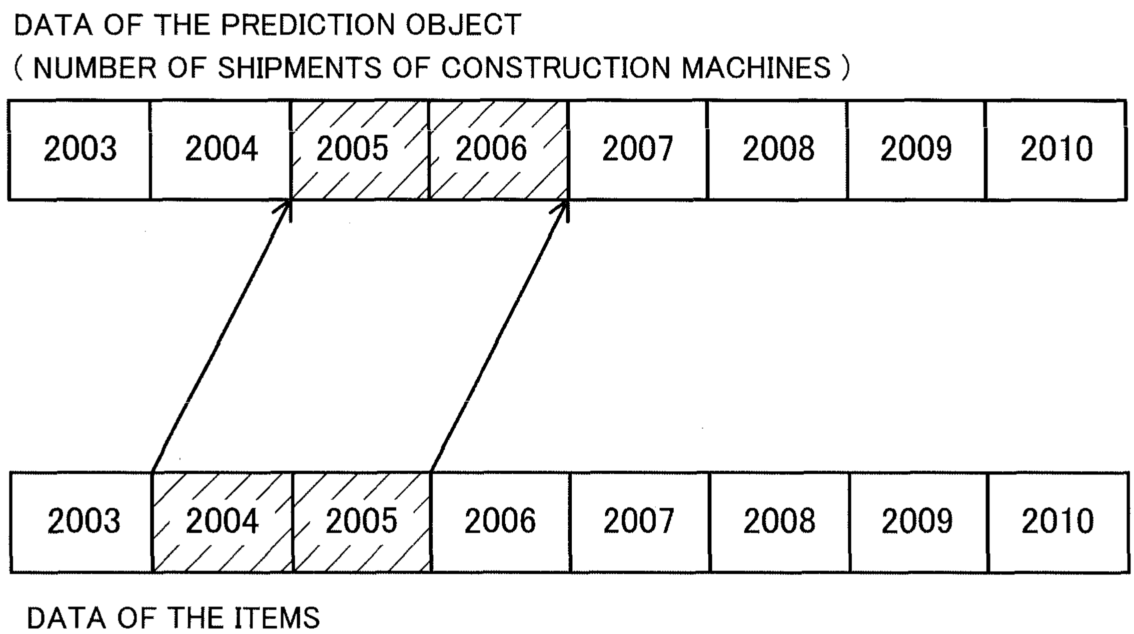
DATA OF THE PREDICTION OBJECT
( NUMBER OF SHIPMENTS OF CONSTRUCTION MACHINES )
2003
2004
2005
2006
2007
2008
2009
2010
2003
2004
2005
2006
2007
2008
2009
2010
DATA OF THE ITEMS

FIG. 15

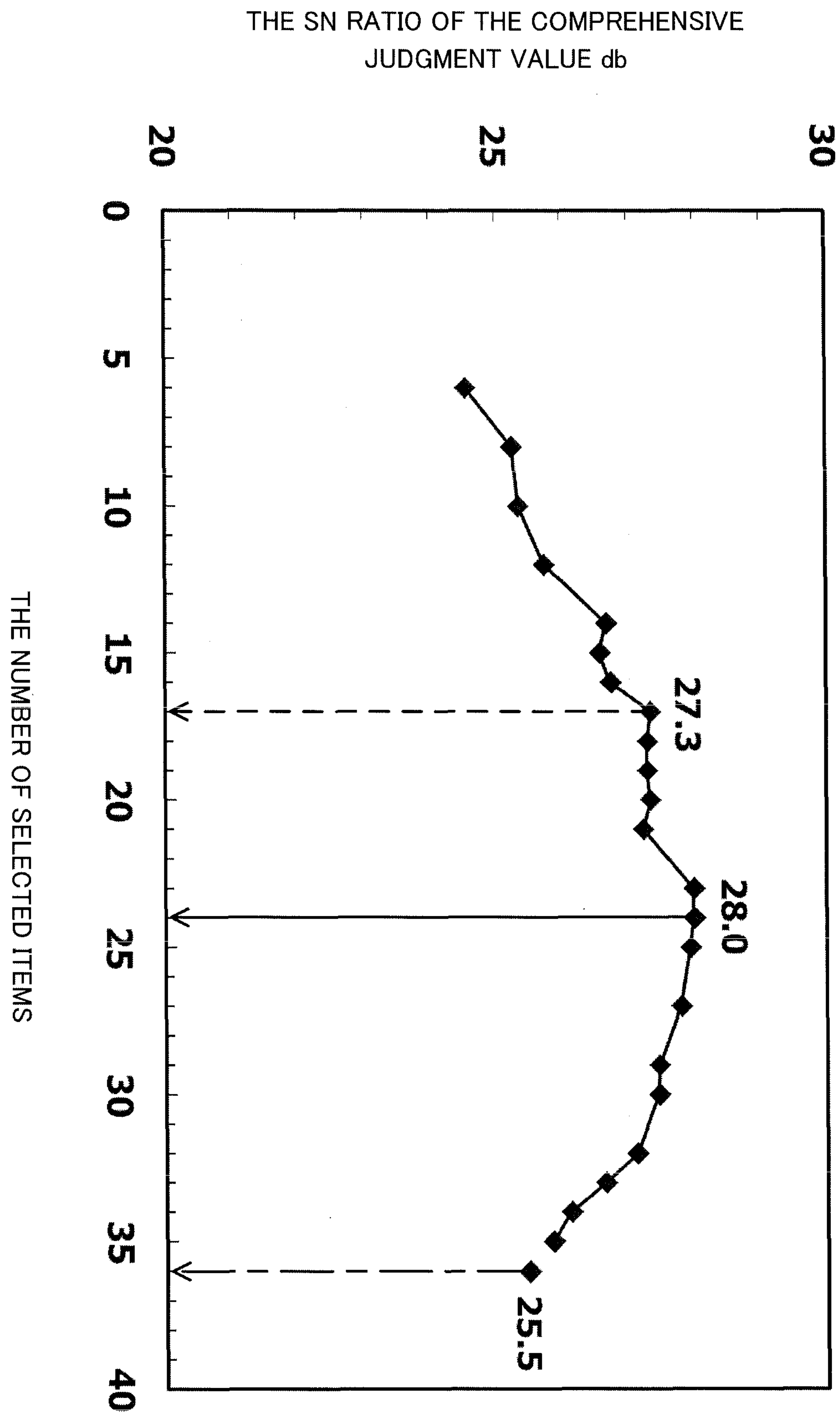
THE SN RATIO OF THE COMPREHENSIVE JUDGMENT VALUE db
20
25
30
0
5
10
15
20
25
30
35
40
27.3
28.0
25.5
THE NUMBER OF SELECTED ITEMS

FIG. 16

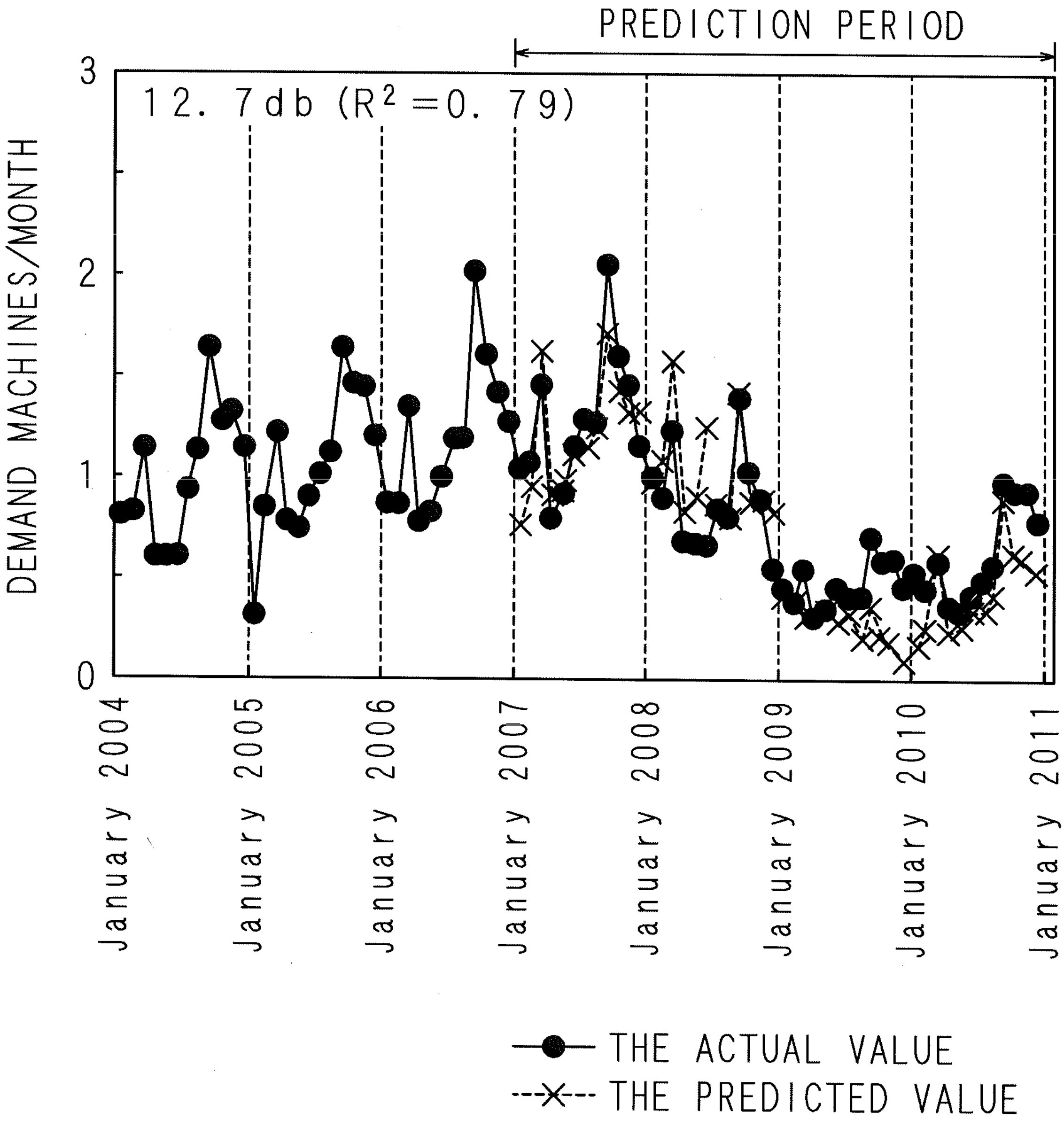
PREDICTION PERIOD
12. 7db ($R^2$=0. 79)
DEMAND MACHINES/MONTH
3
2
1
0
January 2004
January 2005
January 2006
January 2007
January 2008
January 2009
January 2010
January 2011
THE ACTUAL VALUE
THE PREDICTED VALUE

FIG. 17

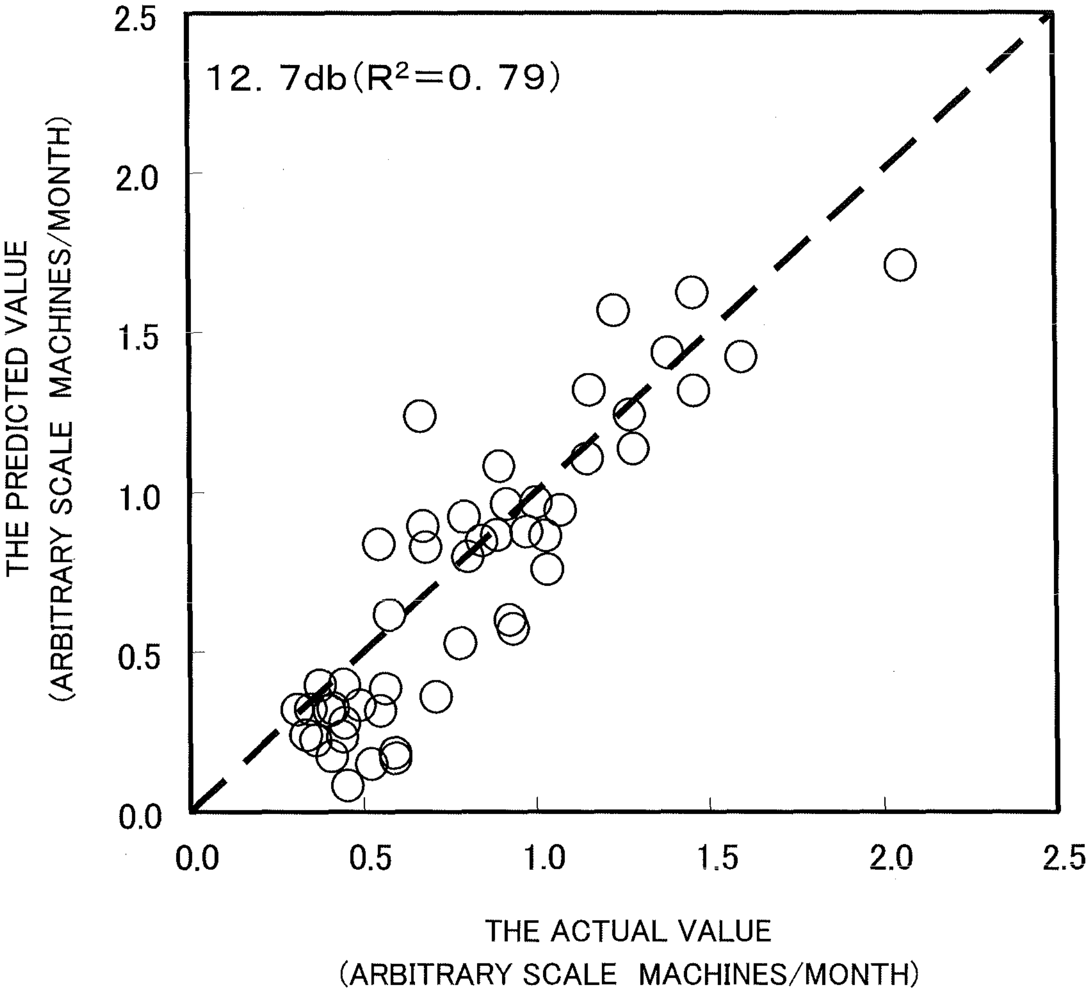
12. 7db($R^2$=0. 79)
THE PREDICTED VALUE
(ARBITRARY SCALE MACHINES/MONTH)
2.5
2.0
1.5
1.0
0.5
0.0
0.0
0.5
1.0
1.5
2.0
2.5
THE ACTUAL VALUE
(ARBITRARY SCALE MACHINES/MONTH)

FIG. 18

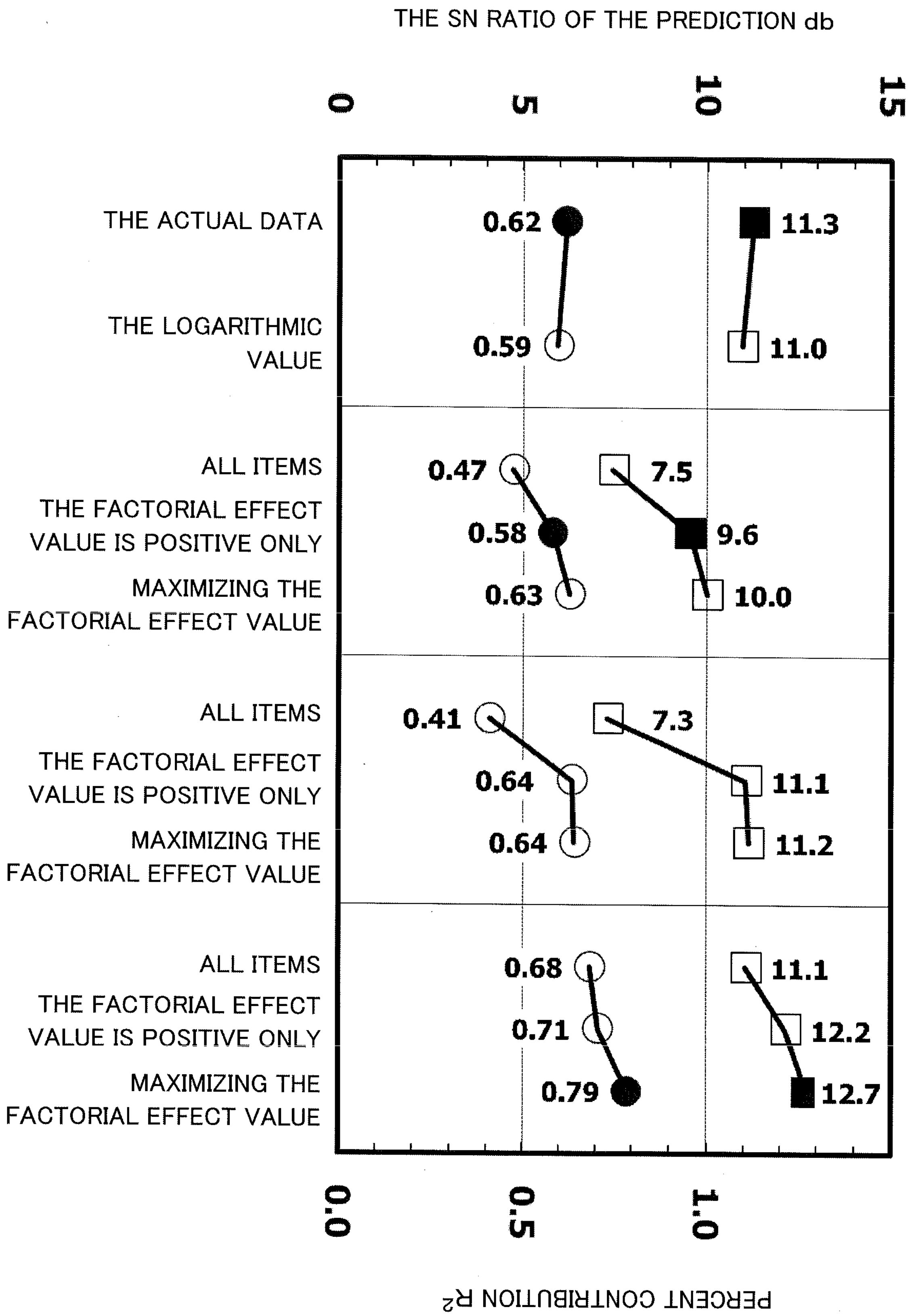
THE SN RATIO OF THE PREDICTION db
0
5
10
15
THE ACTUAL DATA
THE LOGARITHMIC VALUE
ALL ITEMS
THE FACTORIAL EFFECT VALUE IS POSITIVE ONLY
MAXIMIZING THE FACTORIAL EFFECT VALUE
ALL ITEMS
THE FACTORIAL EFFECT VALUE IS POSITIVE ONLY
MAXIMIZING THE FACTORIAL EFFECT VALUE
ALL ITEMS
THE FACTORIAL EFFECT VALUE IS POSITIVE ONLY
MAXIMIZING THE FACTORIAL EFFECT VALUE
0.62
11.3
0.59
11.0
0.47
7.5
0.58
9.6
0.63
10.0
0.41
7.3
0.64
11.1
0.64
11.2
0.68
11.1
0.71
12.2
0.79
12.7
0.0
0.5
1.0
PERCENT CONTRIBUTION R2

FIG. 19

| Name of Items |
|---|
| January |
| February |
| March |
| April |
| May |
| June |
| July |
| August |
| September |
| October |
| November |
| December |
| Retail and food services sales,total |
| Supermarkets and other grocery stores |
| USA Truck class8 sales volume |
| Civilian Population |
| Labor Force |
| Participation Rate |
| Employment,Total |
| Non-Farm Wage & Salary Employment |
| Self Employment |
| Unemployed Total |
| Unemployment Rate |
| Employment Rate |
| Employment Committed |
| Payroll Committed ( $thds. ) |
| Number of Plant Openings |
| Employment at the Beginning operation |
| Plant Shutdowns |
| Employment Lost in Shutdowns |
| Electric Energy Consumption ( mm kwh ) |
| Exports USA |
| Imports USA |
| Air Cargo ( thds.of lbs ) Inbound |
| Air Cargo ( thds.of lbs ) Outbound |
| GDB Economic Activity Index |
| RETAIL & FOOD SERVICES |
| FOOD & BEVERAGE STORES |
| FOOD SERVICES & DRINKING PLACES |
| MOTOR VEHICLE & PARTS DEALERS |
| GENERAL MERCHANDISE STORES |
| HEALTH & PERSONAL CARE STORES |
| GASOLINE STATIONS |
| DEPARTMENT STORES ( EXCL.LEASED DEPT. ) |
| Grain feed, Corn export |
| Grain feed, Corn import |
| Grain feed, Rail car loading |
| Livestock meat, Export, Beef and Veal |

F I G. 2 0

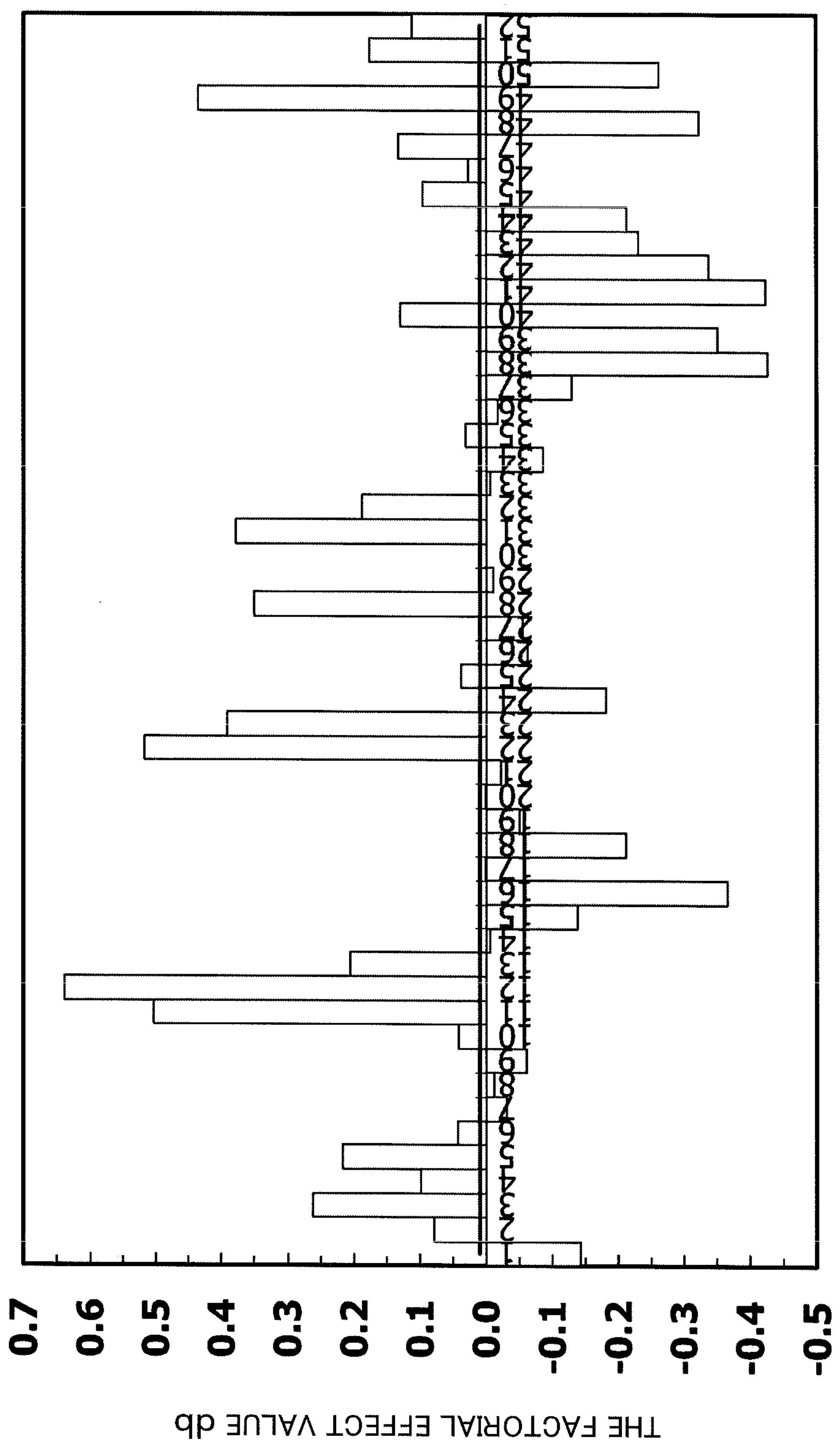
THE FACTORIAL EFFECT VALUE db
0.7
0.6
0.5
0.4
0.3
0.2
0.1
0.0
-0.1
-0.2
-0.3
-0.4
-0.5

FIG. 21

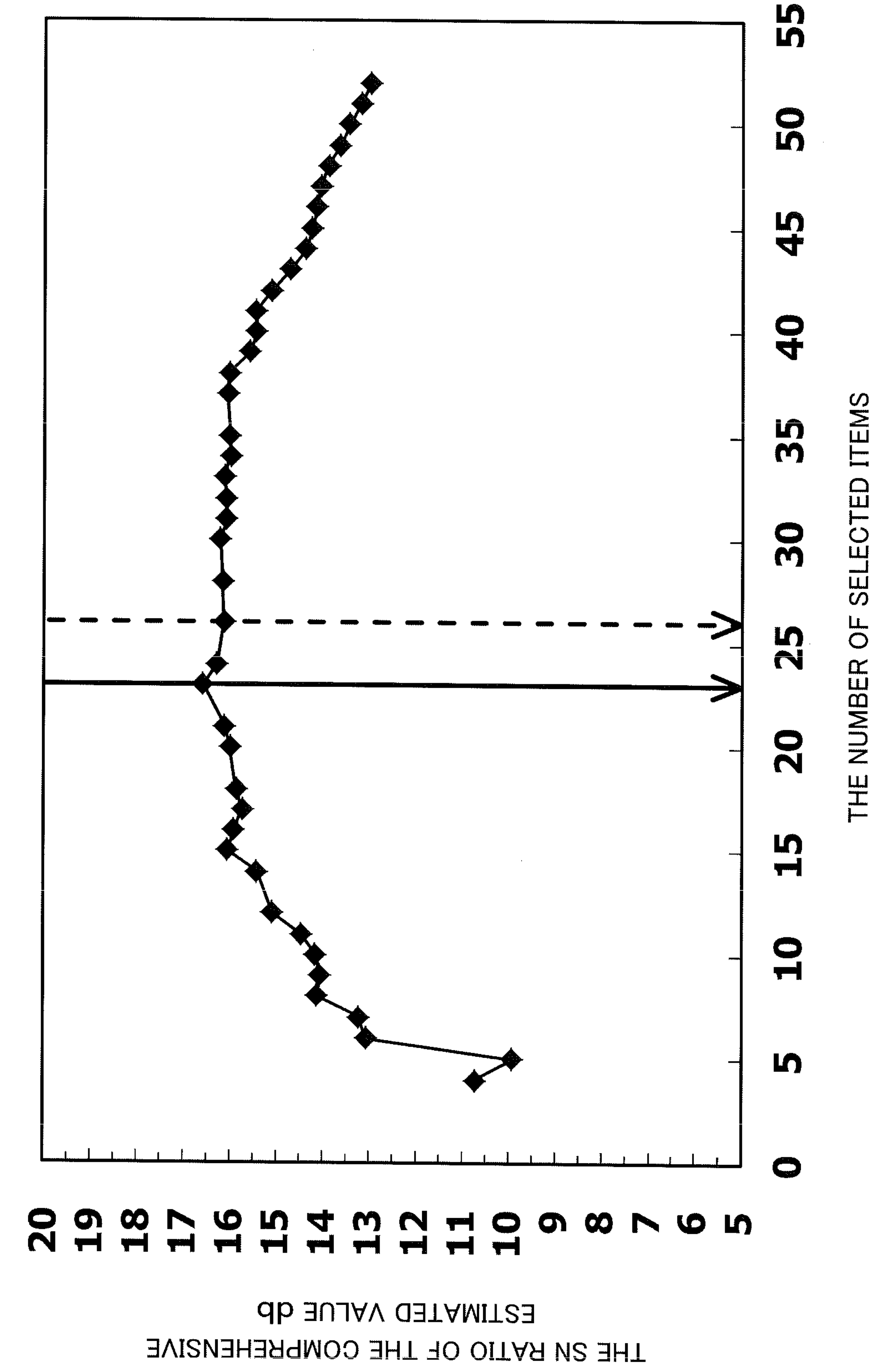
THE SN RATIO OF THE COMPREHENSIVE
ESTIMATED VALUE db
20
19
18
17
16
15
14
13
12
11
10
9
8
7
6
5
0
5
10
15
20
25
30
35
40
45
50
55
THE NUMBER OF SELECTED ITEMS

FIG. 22A

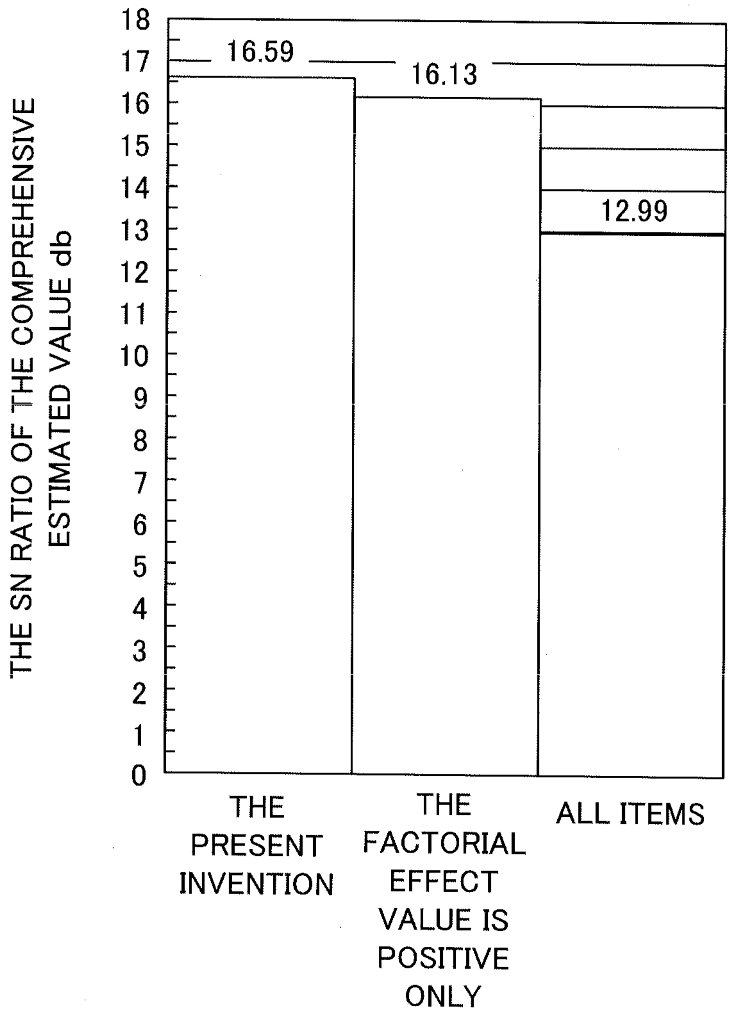
THE SN RATIO OF THE COMPREHENSIVE ESTIMATED VALUE db
18
17
16
15
14
13
12
11
10
9
8
7
6
5
4
3
2
1
0
16.59
16.13
12.99
THE PRESENT INVENTION
THE FACTORIAL EFFECT VALUE IS POSITIVE ONLY
ALL ITEMS

FIG. 22B

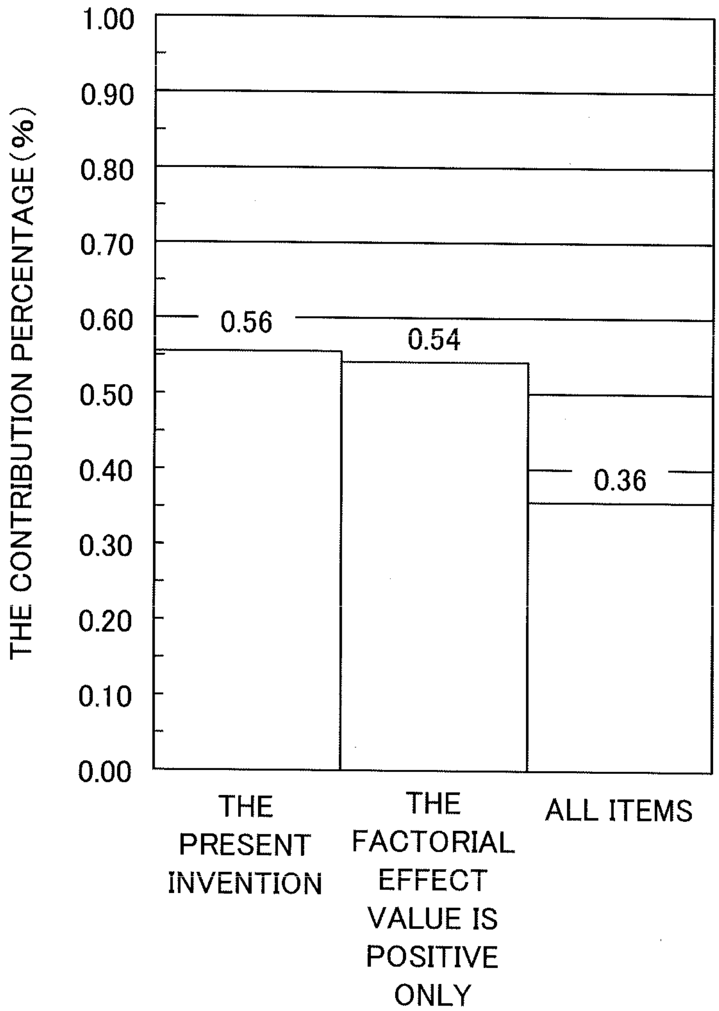
THE CONTRIBUTION PERCENTAGE (%)
1.00
0.90
0.80
0.70
0.60
0.50
0.40
0.30
0.20
0.10
0.00
0.56
0.54
0.36
THE PRESENT INVENTION
THE FACTORIAL EFFECT VALUE IS POSITIVE ONLY
ALL ITEMS

## INTERNATIONAL SEARCH REPORT

International application No.
PCT/JP2012/057839

A. CLASSIFICATION OF SUBJECT MATTER
*G06Q10/04*(2012.01)i, *G06F17/30*(2006.01)i, *G06Q50/04*(2012.01)i

According to International Patent Classification (IPC) or to both national classification and IPC

B. FIELDS SEARCHED

Minimum documentation searched (classification system followed by classification symbols)
G06Q10/04, G06F17/30, G06Q50/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | Kazuo TATEBAYASHI, Nyumon MT System, 1st edition, JUSE Press, Ltd., 04 December 2008 (04.12.2008), pages 73 to 90 | 1,5,6<br>4<br>2,3 |
| Y<br>A | JP 2010-211684 A (Toshiba Corp.), 24 September 2010 (24.09.2010), paragraph [0023] (Family: none) | 4<br>2,3 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 May, 2012 (11.05.12) | 22 May, 2012 (22.05.12) |
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3141164 B


### Non-patent literature cited in the description


- Introduction to MT system. **SHOICHI TEJIMA ; YOSHIKO HASEGAWA.** Nikkagiren Shuppan-Sha. JUSE Press, Ltd, December 2008